# EUROPÄISCHE PATENTSCHRIFT

(11) **EP 2 607 437 B1**
(45) Veröffentlichungstag und Bekanntmachung des Hinweises auf die Patenterteilung: **03.09.2014**
(21) Anmeldenummer: 12195369.9
(22) Anmeldetag: 04.12.2012
(51) Int. Cl.: C09D 183/08, C08G 77/26, C08L 83/08

(54) **Siloxannitrone und deren Anwendung**
Siloxane nitrones and their application
Siloxane-nitrone et son utilisation

(30) Priorität: 16.12.2011 DE 102011088787
(43) Veröffentlichungstag der Anmeldung: 26.06.2013
(73) Patentinhaber: Evonik Industries AG, 45128 Essen (DE)
(72) Erfinder: Knott, Wilfried, Dr., 45355 Essen (DE); Cavaleiro, Pedro, Dr., 41749 Viersen (DE); Eicke, Björn, 46244 Bottrop (DE); Amajjahe, Sadik, Dr., 40591 Düsseldorf (DE); Henning, Frauke, Dr., 45259 Essen (DE); Steenweg, Kai, 46244 Bottrop (DE)

(56) Entgegenhaltungen:
- US-A1- 2007 189 672

## Beschreibung

### Gebiet der Erfindung

Die Erfindung betrifft die Herstellung von nitrontragenden Siloxanen und deren Anwendung als Additive für strahlenhärtende Beschichtungen.

### Stand der Technik

Nitrone sind vielseitige Zwischenprodukte in einer Reihe von Anwendungen. So sind Nitrone zum Beispiel wichtige Intermediate in der organischen Synthese, besonders in der von Huisgen (Huisgen et al., Chem Ber 102, 736-745, 1969) beschriebenen [3+2] Cycloaddition. Nitrone sind hervorragende 1,3-Dipole und haben daher die Fähigkeit, mit Doppel- und Dreifachbindungen 5-gliedrige heterocyclische Ringstrukturen zu bilden. Die Reaktion von Nitronen mit sowohl Doppel- als auch Dreifachbindungen ergeben beispielsweise Isoxazoline bzw. Isoxazole. Auf diese Weise wurden zahlreiche biologisch aktive Moleküle, wie etwa Antibiotika, Alkaloide, Aminzucker und beta-Lactame synthetisiert.

In der WO 2009/074310 ist beispielsweise die Vernetzung von organischen Polynitronen mit ungesättigten Polymeren unter Ablauf einer [3+2] Cycloaddition beschrieben. Die Polynitrone dienen als Vernetzungsmittel und führen gleichzeitig zu einer Erhöhung der Mattierung.

Die WO 2009/136920 beschreibt multifunktionelle Nitrone in nicht-radikalischen Systemen. Die Nitrone fungieren als 1,3-Dipole und führen zur Härtung von Formulierungen von Klebstoffen, Lacken und Einbettmassen, welche zum Beispiel für elektronische Anwendungen von Bedeutung sind. Die Cycloaddition hat hier den Vorteil, dass sowohl eine Inertisierung überflüssig ist als auch ein Volumenschrumpf vermieden wird.

Nitrone sind weiterhin dafür bekannt, als sogenannte "spin traps" freie Radikale effektiv abzufangen. Dabei reagiert das diamagnetische Nitron sehr schnell mit einem freien Radikal, welches paramagnetisch ist und über einen Spin verfügt, zu einem neuen wesentlich stabileren Radikal Addukt in Form des Nitroxids. Bei ausreichender Lebensdauer lassen sich diese gebildeten Nitroxid Radikale über Elektronenspinresonanz Spektroskopie eindeutig nachweisen. Daher werden Nitrone in der analytischen Chemie zur Untersuchung von freien radikalischen Prozessen verwendet, da die freien Radikale selbst häufig eine zu kurze Lebensdauer besitzen.

So ist in der Patentschrift US 6107315 das monofunktionelle "spin trap" Reagenz alpha-Phenyl-N-tert-butyl nitron (PBN) beschrieben, welches Patienten zur Behandlung von Symptomen im Zusammenhang mit Alterung und oxidativen Gewebeschäden verabreicht wurde.

Der Einsatz von monofunktionellen nitronhaltigen Verbindungen zur Verbesserung der Alterung von Zubereitungen von Klebstoffen und Dichtmassen basierend auf (Meth-) acrylsäureester und organischen Hydroperoxidinitiatoren ist aus der US 3991261 bekannt.

Eine deutlich verbesserte Topfzeit durch Zugabe von monofunktionellen organischen Nitronen wird in der US 3988229 auch für photopolymerisierbare und photovemetzbare Polymere proklamiert. Durch die Zugabe eines Nitrons verbessert sich die Lagerstabilität bei 50 °C von anfangs 116 Stunden auf mehr als 2000 Stunden.

Eine weitere Besonderheit der Nitrone ist ihre UV-induzierte Umlagerung zu stabilen Oxaziridinen, die einer Photobleiche gleichkommt. So ist der Einbau von Nitronen in die Seitenketten von Polyacrylaten für die Anwendung als "Waveguides" in der US 5273863 beschrieben. Bei UV-Bestrahlung ändert sich der Brechungsindex der Polymere aufgrund der Umlagerung der Nitrone zu Oxaziridinen. Die US 6162579 beschreibt den Einsatz von monofunktionellen Nitronen für "multi-purpose-Anwendungen" in Photopolymeren. Das zugesetzte Nitron fungiert dabei sowohl als Additiv zur Polymerisationsinhibierung als auch zur Kontrastverstärkung.

Des Weiteren sind Nitrone als "spin traps" hervorragend geeignet radikalische Polymerisationsreaktionen zu kontrollieren. Durch geeignete Auswahl eines Nitrons lässt sich eine enge Polydispersität im Vergeich zu einer klassisch geführten radikalischen Polymerisation ohne Nitron erzielen (Polymer 46, 9632-9641, 2005). So beschreibt auch zum Beispiel die US 6333381 den Einsatz von PBN, um die Polymerisation einer Reihe von Kautschuktypen zu kontrollieren. Die JP 2010153649 setzt monomore organische Nitrone gezielt als Additive ein, um stabile Filme von reinen Vinylcyclosiloxanen zu erhalten, indem die Polymerisation durch die inhibierenden Eigenschaften der organischen Nitrone verlangsamt wird.

Die Funktionalisierung von Kautschukpolymeren auf der Basis von polymeren Alkenen stellt ein anderes Beispiel für die Anwendung von Polymeren dar und ist in der US 7485684 offenbart. Hierbei reagieren verschiedene Lithiumterminierte Kautschukpolymere, wie beispielsweise Polybutadien oder Polyisopren mit monofunktionellen Nitronen zu einem Hydroxylamin, welches die Wechselwirkungen zwischen Kautschukpolymeren und Füllstoffen, wie Russ oder Kieselgel, erhöht und damit die Dispergierung der Füllstoffe und die resultierenden Materialeigenschaften von beispielsweise Autoreifen signifikant verbessert.

Weiterhin ist der Einsatz von Nitronen auch in Kosmetik-, Haushalts- und Textilanwendungen beschrieben. Gemäß der WO 2005/041905 finden Nitrone und deren Derivate Verwendung als Stabilisatoren für farbige Produkte wie beispielsweise Hautpflegeprodukte, Haarpflegeprodukte oder Waschmittel. Die Nitrone verhindern eine Abnahme der Farbintensität, wie durch vergleichende Bestrahlungstests herausgefunden wurde.

Die EP 1239006 offenbart die Stabilisierung von Polyethylenterephthalat (PET) und Polyamiden mit Hilfe von Nitronen. Durch Zugabe von Nitronen konnten reduzierte Acetaldeyhd-Konzentrationen nach der Extrusion von PET bzw. Polyamiden mittels GC/FID nachgewiesen werden. PET und Polyamide sind gängige Kunststoffe zur Herstellung von Plastikflaschen, Konsumgüterartikeln und Lebensmittelverpackungen.

Nitrone sind technisch über eine Reihe von Verfahren zugänglich. Die gängigste Methode zur direkten Synthese von Nitronen ist die Kondensation von einem Aldehyd mit einem Hydroxylamin (Compr Org Chem, Vol.2, 196-201, Pergamon Press, 1979).

Alternativ kann das Hydroxylamin in situ hergestellt und mit einem Aldehyd umgesetzt werden. Cherry et al. (JOC, 50, 1531-1532, 1985) beschreiben hierzu die Synthese von alpha-Phenyl-N-tert-butyl nitron aus Benzaldehyd und 2-Methyl-2-nitro-propan mittels Zinkpulver.

In Adv Synth Catal 2005, 347, 1223-1225 ist die Oxidation primärer Amine in Gegenwart von Natriumwolframat und eines Harnstoff-Wasserstoffperoxid Adduktes zu den entsprechenden Hydroxylaminen erläutert.

Weiterhin ist auch die direkte Umsetzung von sekundären Aminen zu Nitronen durch Oxidation bekannt. Hierzu bedient man sich verschiedener Katalysatoren..So werden beispielsweise die Aminogruppen von Alkyl-alpha-Aminosäuren mit Natriumwolframat (JOC 59, 6170, 1994) oder auch sekundäre Amine mit Hilfe von Methyltrioxorhenium (MTO) zu den entsprechenden Nitronen oxidiert (JOC 61, 8099, 1996).

Weiterhin ist bekannt, dass sich Imine direkt in Nitrone überführen lassen. So eignet sich dazu beispielsweise Kaliumpermanganat als Oxidationsagens in Gegenwart eines Phasentransferkatalysators (JOC 54, 126, 1989).

Die US 2004/0122225 beschreibt weiterhin die Verwendung von DuPont™ Oxone® monopersulfate compound zur Oxidation von Iminen zu Oxaziridinen und anschließender thermischer Behandlung bei 120°C, die eine Umlagerung zu den entsprechenden Nitronen herbeiführt.

Ein weiteres oxidierendes Reagenz ist meta-Chlorperbenzoesäure (m-CPBA) als Oxidationsmittel von Iminen zu Nitronen beschrieben. Die EP 2060561 offenbart die Synthese von Nitronen durch Oxidation von Iminen zu den entsprechenden Nitronen. Hierbei werden subsituierte, in para-Stellung einen Substituenten mit +M-Effekt tragende Phenolimine zu Nitronen umgesetzt, ohne dass die Oxidation zur Oxaziridin-Zwischenstufe führt.

Strahlenhärtende Beschichtungen sind bekannt und beispielsweise in "UV & EB curing formulation for printing inks, coatings & paints" (R. Holman, P. Oldring, London 1988) beschrieben.

Im Bereich der UV-Druckfarben besteht ein Bedarf an vernetzbaren, modifizierten Siliconzusatzmitteln, welche in geringen Konzentrationen die Handhabbarkeit von insbesondere serienmäßig bedruckten Gegenständen verbessern, wobei diese Zusatzmittel insbesondere die Kratzfestigkeit der frischen Oberflächen verbessern, deren Gleitfähigkeit erhöhen, sehr rasch nach Vernetzung eine hohe ReleaseWirkung aufweisen und aufgrund ihrer Vernetzung stationär im Film verbleiben. Dabei sollen derartige Zusatzmittel von der Art und Zusammensetzung der Druckfarbe, der sie zur Verbesserung der vorgenannten Eigenschaften zugesetzt werden, weitgehend unabhängig und universell anwendbar sein Diese Additive sollen in möglichst geringen Mengen wirksam sein und die anwendungstechnischen Eigenschaften der Druckfarbe nicht verschlechtern Sie sollen insbesondere nicht die Ausbildung des Oberflächenfilmes und die Aushärtung der Druckfarbe beeinträchtigen. Sie dürfen ferner keinen nachteiligen Effekt auf die Lagerungseigenschaften der Druckfarbe haben und dürfen die Verlaufeigenschaften nicht verschlechtern

Polysiloxane, die Acrylsäureestergruppen (Acrylatgruppen) enthalten, haben sich als unter energiereicher Strahlung härtbare Additive, z B. für Druckfarben und zur Herstellung von Lackbindemitteln oder für Beschichtungsmittel für Kunststoff-, Papier-, Holz- und Metalloberflächen, bisher bewährt. Die Härtung erfolgt bevorzugt bei niedrigen Temperaturen und wird durch Elektronenstrahlung oder durch UV-Strahlung in Gegenwart von Photoinitiatoren des Standes der Technik, wie z. B. Benzophenon und seine Derivate induziert (EP 1897917).

Ein Nachteil der Siloxanacrylate ist ihre geringe Topfzeit, da die Acrylatgruppen zur Polymerisation neigen. Ein weiterer Nachteil der Siloxanacrylate ist die nicht ausreichende Kompatibilität mit der Bindemittelmatrix. Dadurch kommt es nach einiger Zeit zur Phasenseparation Dieses Problem wird bisher auf kinetischem Wege versucht zu beheben, indem die Bindemittelmatrix oder auch Zusatzstoffe die Viskosität der Mischung derart stark erhöhen, dass eine Phasenseparation praktisch nicht eintritt.

Aufgabe der vorliegenden Erfindung ist daher die Bereitstellung von neuen bzw. alternativen Siloxanen, die als Vernetzer z. B. in Bindmitteln geeignet sind und einen oder mehrere der Nachteile der Siloxane des Standes der Technik nicht aufweisen.

Überraschenderweise wurde gefunden, dass mit Nitron-gruppen funktionalisierte Siloxane, die (Poly-)Siloxannitrone gemäß Formel (I) sind, diese Aufgabe lösen.

Gegenstand der vorliegenden Erfindung sind deshalb nitronhaltige Polymere wie in den Ansprüchen beschrieben.

Ebenfalls Gegenstand der vorliegenden Erfindung ist ein Verfahren zur Herstellung von siliziumhaltigen Polymeren enthaltend mindestens eine Nitrongruppe bei dem eine siliziumhaltige Verbindung, die ein oder mehrere Aldehyd- oder Ketogruppen enthält mit einem stickstoff-monosubstituierten Hydroxylamin umgesetzt wird.

Weiterhin sind Gegenstand der vorliegenden Erfindung Zubereitungen, die die erfindungsgemäßen Polymeren enthalten sowie die Verwendung der erfindungsgemäßen Polymeren sowie der erfindungsgemäßen Zubereitungen als oder zur Herstellung von Beschichtungsmitteln und Druckfarben.

Die erfindungsgemäßen Polymeren haben den Vorteil, dass durch ihren Einsatz zu strahlenhärtenden Beschichtungen gelangt werden kann, die ein verbessertes Eigenschaftsprofil aufweisen. Dazu können beispielsweise gehören eine glatte und fehlerfreie Oberfläche der ausgehärteten Druckfarbe, die durch niedrige Release-Werte gekennzeichnet ist. Eine fehlerfreie Oberfläche zeichnet sich durch das nicht Vorhandensein von Benetzungsstörungen wie z. B. Krater, Nadelstiche aus.

Ein weiterer Vorteil der erfindungsgemäßen Polymeren besteht darin, dass mit Ihnen, lagerstabile bzw. lagerstabilere strahlenhärtende Beschichtungsformulierungen bereitgestellt werden können, bei denen keine Phasentrennung zwischen dem siliconbasierten Additiv und den hydrophileren Acrylatbindemitteln auftritt.

Ein weiterer Vorteil besteht darin, dass die erfindungsgemäßen Nitron-tragenden Polymere bei Verwendung als Additiv die Viskosität einer Formulierung mit Bindemittel gegenüber dem reinen Bindemittel nicht wesentlich erhöht. Unter nicht wesentlich wird vorzugsweise eine maximale Erhöhung von 35 % verstanden.

Vorteilhaft sind die erfindungsgemäßen nitrontragenden Polymere gegenüber beispielsweise den bekannten Siliconacrylaten ohne Nitrongruppen auch deshalb, weil die erfindungsgemäßen Nitrone einerseits als 1,3-Dipole anderseits als Radikalfänger eingesetzt werden können. Ein weiterer Vorteil der erfindungsgemäßen nitrontragenden Polymere im Vergleich zu organischen Nitronen ist ihr möglicher Einsatz als Oberflächenadditiv in unterschiedlichen Formulierungen. Weiterhin sind die erfindungsgemäßen nitrontragenden Polymere vorteilhaft, da sie zur Erhöhung der Stabilität von Acrylatformulierungen beitragen können.

Lagerstabilität im Sinne der Erfindung ist charakterisiert durch die Homogenität der Zubereitungen, bevorzugt zeigen die erfindungsgemäßen zugesetzten nitrontragenden Polymere keine Tendenz zur Phasenseparation in der fertigen Zubereitung; insbesondere bevorzugt zeigen die erfindungsgemäßen Zubereitungen auch nach 14 Tagen Lagerung bei 50°C und anschließender Abkühlung auf Raumtemperatur keine Ausbildung einer mit bloßem Auge sichtbaren Phasengrenze.

Die erfindungsgemäßen Polymeren und das erfindungsgemäße Verfahren, mit diesen erhältliche Zubereitungen sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben wenn nicht anders angegeben auf die Gesamtzusammensetzung. Werden nachfolgend Mittelwerte angegeben, so handelt es sich, wenn nicht anders angegeben um Zahlenmittel. Werden Molmassen verwendet, handelt es sich; wenn nicht ausdrücklich anders vermerkt um gewichtsmittlere Molmassen Mw. Werden im Umfang dieser Erfindung Werte für Viskositäten angegeben, handelt es sich falls nicht anders vermerkt um dynamische Viskositäten, die mit dem Fachmann geläufigen Methoden ermittelt werden können. Werden nachfolgend Messwerte angegeben, so wurden diese Messwerte, wenn nicht anders angegeben, bei einem Druck von 101325 Pa und einer Temperatur von 23°C ermittelt.

### Beschreibung der Erfindung:

Die erfindungsgemäßen siliziumhaltigen Polymere zeichnen sich dadurch aus, dass sie mindestens eine Nitrongruppe enthalten.

Die erfindungsgemäßen Polymere sind (Poly-)Siloxane, bevorzugt Siloxane.

Erfindungsgemäße Polymere sind (Poly-)Siloxannitrone gemäß Formel (I)

M¹ₐ₁M²ₐ₂M³ₐ₃D¹_{b1}D²_{b2}D³_{b3}T_{c}Q_{d} (I)

mit
- M¹: = [R¹₃SiO_{1/2}]
- M²: = [R²R¹₂SiO_{1/2}]
- M³: = [R³R¹₂SiO_{1/2}]
- D¹: = [R¹₂SiO_{2/2}]
- D²: = [R¹R²SiO_{2/2}]
- D³: = [R¹R³SiO_{2/2}]
- T: = [R¹SiO_{3/2}]
- Q: = [SᵢO_{4/2}]
wobei
- a1: 0 bis 50, bevorzugt <10, insbesondere 0;
- a2: 0 bis 50, bevorzugt <10, insbesondere 0;
- a3: 0 bis 50, bevorzugt 1-30, insbesondere >0;
- b1: 10 bis 5000, bevorzugt 10 bis 1000, insbesondere 10 bis 500;
- b2: 0 bis 50, bevorzugt 0 bis 25, insbesondere 0;
- b3: 0 bis 50, bevorzugt 0 bis 25, insbesondere >0,
- c: 0 bis 50, bevorzugt 0 bis 10, insbesondere 0;
- d: 0 bis 50, bevorzugt 0 bis 10, insbesondere 0;
mit der Maßgabe, dass mindestens einer der Indices a3 und b3 größer 0, vorzugsweise größer 1 ist,
- R¹ =: unabhängig voneinander gleiche oder verschiedene lineare oder verzweigte, gesättigte oder ungesättigte Kohlenwasserstoffreste mit 1 bis 30 Kohlenstoffatomen oder aromatische Kohlenwasserstoffreste mit 6 bis 30 Kohlenstoffatomen,
Kohlenstoffatomen oder aromatische Kohlenwasserstoffreste mit 6 bis 30 Kohlenstoffatomen,
bevorzugt Alkylreste mit 1 bis 14 Kohlenstoffatomen oder monocylische Aromaten,
weiterhin bevorzugt Methyl, Ethyl, Propyl oder Phenyl, insbesondere Methyl;
- R² =: unabhängig voneinander gleiche oder verschiedene lineare oder verzweigte, gesättigte oder ungesättigte Kohlenwasserstoffreste, welche mit Stickstoff- oder Sauerstoffatomen substituiert sein können, bevorzugte Kohlenwasserstoffe sind Alkylreste mit 1 bis 30 Kohlenstoffatomen,
die mit ein oder mehreren Hydroxyfunktionen und oder stickstofftragenden Gruppen substituiert sein können,
wobei die stickstofftragenden Gruppen in quaternärer Form als Ammoniumgruppen vorliegen können,
die mit einer Epoxidgruppe substituiert sein können,
und/oder die mit ein oder mehreren Carboxyl-, Aminosäure-, Betain- und/oder Estergruppen substituiert sein können,
oder R² ist ein Arylrest mit 6 bis 30 Kohlenstoffatomen
oder R² ist ein Polyoxyalkylenrest der Formel (IV), 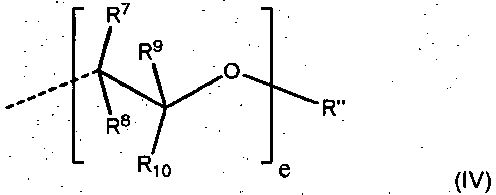 worin
e gleich 1 bis 150, bevorzugt 2 bis 100, mehr bevorzugt größer 2, insbesondere 3 bis 20 ist,
R⁷ oder R⁸, sowie R⁹ oder R¹⁰ gleich oder auch unabhängig voneinander Wasserstoff, einwertige Alkylreste mit 1 bis 12 Kohlenstoffatomen und/oder Arylreste mit 6 bis 12 Kohlenstoffatomen sind,
welche gegebenenfalls auch weiter mit Hydroxy-, Methoxy-, Ethoxy-, Methyl- und/oder Ethylgruppen substituiert sein können,
   oder R⁷ und R⁹, sowie unabhängig davon R⁸ und R¹⁰ können gemeinsam einen Ring bilden, der die Atome an die R⁷ und R⁹, sowie R⁸ und R¹⁰ gebunden sind einschließt,
   oder R⁷ und R⁸ sowie unabhängig davon R⁹ und R¹⁰ können gemeinsam einen Ring bilden, der die Atome an die R⁷ und R⁸ sowie R⁹ und R¹⁰ gebunden sind einschließt,
   wobei diese Ringe gegebenenfalls auch weiter mit Hydroxy-, Methoxy-, Ethoxy-, Methyl- und/oder Ethylgruppen substituiert sein können und/oder gesättigt und/oder ungesättigt sein können,
   wobei die einzelnen Fragmente mit dem Index e innerhalb des Polyoxyalkylenrests der Formel (IV) untereinander verschieden vorliegen können und dabei statistisch verteilt sind,
   R^{II} unabhängig voneinander Wasserstoffrest, substituiertes oder unsubstituiertes C₁-C₄-Alkyl, -C(O)NH-R¹,-C(O)O-R¹, -C(O)-R^{III} mit
   R^{III} substituierte oder unsubstituierte C₁-C₁₂-Alkyl -CH₂-O-R^{I}, substituierte oder unsubstituierte C₆-C₁₂-Arylgruppe bevorzugt eine Benzylgruppe, bedeutet,
   R^{I} unabhängig voneinander substituierte oder unsubstituierte C₁-C₁₂-Alkyl, substituierte oder unsubstituierte C₆-C₁₂-Arylgruppe, substituierte oder unsubstituierte C₆-C₃₀-Alkaryl,
bevorzugt ist R²
-CH₂-CH₂-CH₂-O-(CH₂-CH₂O-)ₓ-(CH₂-CH(R^{I})O-)_{y}-R^{II},
-CH₂-CH₂-O-(CH₂-CH₂O-)ₓ-(CH₂-CH(R^{I})O-)_{y}-R^{II},
-CH₂-CH₂-CH₂-O-CH₂-CH(OH)-CH₂OH,
-CH₂-CH₂-(O)ₓ-CH₂-R^{N}, -CH₂-R^{IV}, oder
-CH₂-CH₂-CH₂-O-CH₂-C(CH₂OH)₂-CH₂-CH₃,
worin
x 0 bis 100, vorzugsweise > 0, insbesondere 1 bis 50,
x' 0 oder 1,
y 0 bis 100, vorzugsweise > 0, insbesondere 1 bis 50, bevorzugt sind x + y gleich 1 bis 50, mehr bevorzugt größer 1, insbesondere 2 bis 20,
R^{I}, R^{II} und R^{III} wie oben definiert und
R^{IV} C₁-C₅₀-Alkyl, cyclisches C₁-C₅₀-Alkyl, vorzugsweise C₉-C₄₅-Alkyl, cyclisches C₉-C₄₅-bevorzugt C₁₃-C₃₇-Alkyl, cyclisches C₁₃-Alkyl,
R³ = unabhängig voneinander gleiche oder verschiedene Reste der Formel (II) 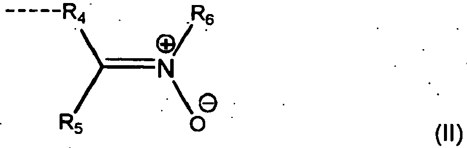 worin
R⁴ ein an das Siloxan gebundener, zweiwertiger, beliebiger organischer Rest, bevorzugt substituiertes oder unsubstituiertes C₁-C₃₀-Alkylen, welches auch durch Heteroatome unterbrochen sein kann und im Falle der Unterbrechung durch Stickstoff kann dieser auch quaternisiert sein, cyclisches C₃-C₃₀-Alkylen, substituiertes oder unsubstituiertes C₁-C₃₀-Alkylenoxy, substituiertes oder unsubstituiertes C₆-C₃₀-Arylen, substituiertes oder unsubstituiertes C₆-C₃₀-Arylenoxy, substituiertes oder unsubstituiertes C₁-C₁₂-Alken- C₆-C₁₂-Arylen, welches auch durch Heteroatome unterbrochen sein kann und im Falle der Unterbrechung durch Stickstoff kann dieser auch quaternisiert sein, und Sulfate, Chloride und Carboxylate, insbesondere Citrate, Lactate, Stearate und Acetate als Gegenionen tragen,
insbesondere ein Rest der Formeln IIIa bis IIIi ist, 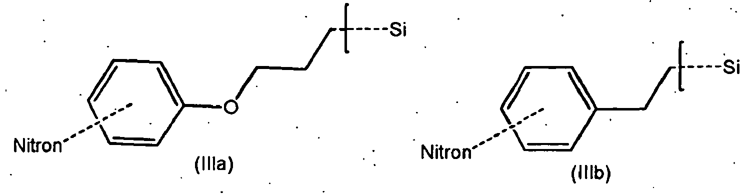 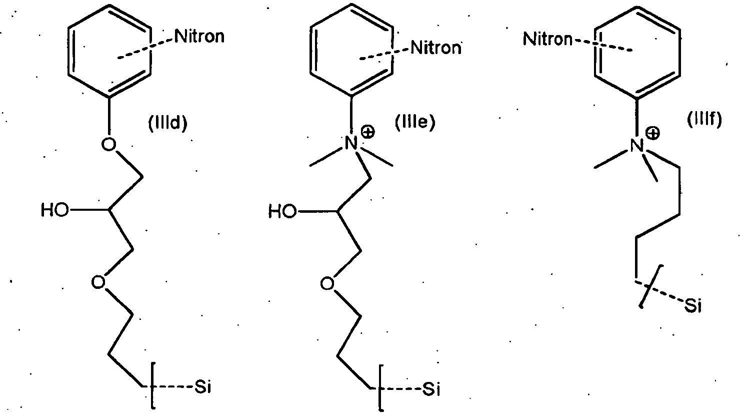 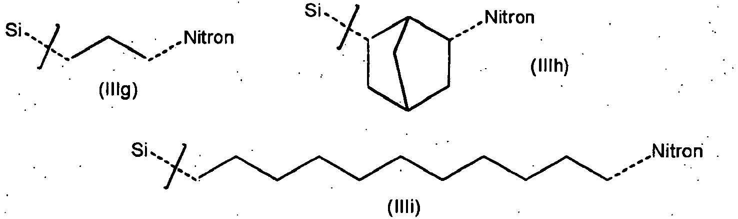 mit Nitron gleich einem Rest der Formel (II), wobei Si das Siloxan darstellt, wobei die Nitron-Reste in den Formeln (IIIa - IIIf) in ortho-, meta- oder para-Stellung angeordnet sein können, vorzugsweise in ortho- oder para-Stellung, insbesondere in para-Stellung angeordnet sind,
mehr bevorzugt ein Rest der Formel (IIIa) oder (IIIb) ;
R⁵ Wasserstoff, substituiertes oder unsubstituiertes C₁-C₃₀-Alkyl, substituiertes oder unsubstituiertes C₆-C₃₀-Aryl, substituiertes oder unsubstituiertes C₆-C₃₀-Heteroaryl, substituiertes oder unsubstituiertes C₁-C₁₂-Alk- C₆-C₁₂-Aryl, substituiertes oder unsubstituiertes C₁-C₃₀-Alkyloxy, substituiertes oder unsubstituiertes cyclisches C₃-C₃₀-Alkyl,
vorzugsweise Wasserstoff oder substituiertes oder unsubstituiertes C₁-C₂₀ Alkyl
oder R⁵ ist ein Rest wie R⁴, wobei die Zusammensetzungen von R⁵ und R⁴ nicht identisch sein müssen;
R⁶ substituiertes oder unsubstituiertes C₁-C₃₀-Alkyl, substituiertes oder unsubstituiertes d₆-C₃₀-Aryl, substituiertes oder unsubstituiertes C₆-C₃₀-Heteroaryl, substituiertes oder unsubstituiertes C₁-C₁₂-Alk- C₆-C₁₂-Aryl, substituiertes oder unsubstituiertes C₁-C₃₀-Alkyloxy, substituiertes oder unsubstituiertes cyclisches C₃-C₃₀-Alkyl, vorzugsweise substituiertes oder unsubstituiertes C₁-C₂₀ Alkyl, mehr bevorzugt C₁-C₇ Alkyl;

Es kann vorteilhaft sein wenn in den erfindungsgemäßen Polymere gemäß Formel (I) a3 = 2 und b3 = 0 ist.

Besonders bevorzugt sind die erfindungsgemäßen Polymere der Formel (I) lineare Polysiloxane (c und d = 0), bevorzugt solche, die terminal nitronsubstituiert sind.

In den erfindungsgemäßen Polymeren ist R⁴ vorzugsweise ein para-substituierter Rest der Formel (IIIa).

In den erfindungsgemäßen Polymeren ist R⁵ vorzugsweise ein Wasserstoffatom und R⁶ eine Methylgruppe.

Besonders bevorzugte erfindungsgemäße Polymere sind solche der Formel (I), bei denen a3 = 2, b3 = 0, c und d = 0, R⁴ ein para-substituierter Rest der Formel (IIIa), R⁵ ein Wasserstoffatom und R⁶ eine Methylgruppe ist.

Die verschiedenen Fragmente der in der Formel (I) angegebenen Siloxanketten können statistisch verteilt oder blockweise angeordnet sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden.

Die in den Formeln (I) und (IV) verwendeten Indices sind als numerische Mittelwerte der genannten statistischen Verteilungen zu betrachten.

Unter Nitronen werden im Rahmen dieser Erfindung N-Oxide eines Imins verstanden, welche durch die Tautomeren der Formeln 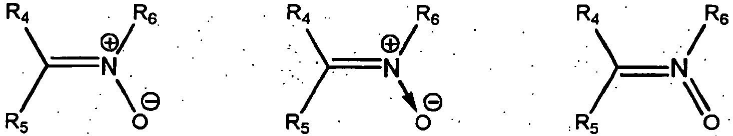 ausgedrückt werden können. Insbesondere sind alle mesomeren und tautomeren wie auch radikalische Spezies wie sie in "Synthesestrategien zur gezielten Kontrolle makromolekularer Architekturen" (Herbert Utz Verlag, 2000) auf Seite 16 aufgeführt sind, eingeschlossen.

Alle Doppelbindungen, auch wenn sie eine bevorzugte Konstitution wiedergeben, bedeuten sowohl E- als auch Z- Konfiguration, beziehungsweise bedeuten sowohl cis- als auch trans- Konfiguration.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen.

Isomere sind dem Fachmann bekannt, in besonderer Weise wird auf die Definitionen von Prof. Kazmaier der Universität des Saarlandes verwiesen, z.B. http://www.uni-saarland.de/fak8/kazmaier/PDF_files/vorlesungen/Stereochemie%20Strassb%20Vo rlage.pdf.

Sofern im Umfang dieser Erfindung auf Naturstoffe Bezug genommen wird, z.B. Lactat, sind grundsätzlich alle Isomeren damit gemeint, bevorzugt sind die jeweils in der Natur vorkommenden Isomere, im hier genannten Falle also das L-Lactat.

Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I) und Formel (IV).

Die erfindungsgemäßen Polymere können auf verschiedene Arten und Weisen erhalten werden. Vorzugsweise erfolgt die Herstellung der erfindungsgemäßen Polymere nach dem nachfolgend beschriebenen erfindungsgemäßen Verfahren.

Das erfindungsgemäße Verfahren zur Herstellung von siliziumhaltiger Polymere enthaltend mindestens eine Nitrongruppe zeichnet sich dadurch aus, dass mindestens ein siliziumhaltiges Polymer, das ein oder mehrere Aldehyd- oder Ketogruppen enthält, vorzugsweise nur ein oder mehrere Aldehydgruppen und keine Ketogruppen enthält, mit einem oder mehreren stickstoff-monosubstituierten Hydroxylamin(en) umgesetzt wird. Die Umsetzung erfolgt vorzugsweise als Kondensationsreaktion.

Bevorzugt wird die Umsetzung mit einem molaren Verhältnis von Aldehyd- und/oder Keto-Gruppen zu Hydroxylamin von 1 zu 1 oder 1 zu größer 1 durchgeführt. Vorzugsweise beträgt das molare Verhältnis von 1 zu 1,1 bis 1 zu 3, bevorzugt von 1 zu 1,5 bis 1 zu 2.

Als stickstoff-monosubstituierte Hydroxylamine können in dem erfindungsgemäßen Verfahren alle bekannten Hydroxylamine eingesetzt werden. Insbesondere können als stickstoff-monosubstituiertes Hydroxylamin z. B. aromatische, wie beispielsweise N-Benzylhydroxylamin, N-(n-nitrobenzyl)hydroxylamin, N-Phenylhydroxylamin, Imidazol-2-methylhydroxylamin, Benzoxazol-2-methylhydroxylamin, Furfurylhydroxylamin oder aliphatischen Hydroxylamine beispielsweise N-Methylhydroxylamin, N-Ethylhydroxylamin, N-Propylhydroxylamin, N-Isopropylhydroxylamin, N-tert-butylhydroxylamin, N-Amylhydroxylamin, N-(2-propen)hydroxylamin, N-(2-propynyl)hydroxylamin, oder alkoxysubstituiertes Hydroxylamin, wie beispielsweise Polyethylenoxid hydroxylamin, oder cyclisch substituiertes Hydroxylamin, wie beispielsweise N-Cyclohexylhydroxylamin eingesetzt werden. Bevorzugt wird im erfindungsgemäßen Verfahren N-Methylhydroxylamin eingesetzt.

Die erfindungsgemäß eingesetzten stickstoff-monosubstituierten Hydroxylamine können aus ihren Salzen, welche mitunter die bevorzugten kommerziellen Produkte darstellen, durch Zusatz von Basen freigesetzt werden. Als Basen eignen sich anorganische Basen, bevorzugt Alkali- oder Erdalkalihydroxide, Alkali- oder Erdalkalicarbonate; als organische Basen eignen sich aliphatische oder aromatische Aminoverbindungen, organische aromatische Basen können Derivate von Pyridin, Imidazol, Pyrrolidin oder Pyrrol sein, bevorzugt jedoch sind tertiäre Amine wie gleich oder unterschiedlich substituierte Trialkylamine, bevorzugt Triethylamin.

Die Freisetzung der Hydroxylamine kann in einem zweiphasigen System aus Wasser und einem begrenzt mit Wasser mischbaren Lösemittel unter Zusatz einer Base erfolgen; Lösemittel können ionische Flüssigkeiten wie in EP 2022574 aufgeführt sein, bevorzugt 1-Ethyl-3-methyl-imidazolium chlorid, 1-Ethyl-3-methyl-imidazolium hexafluorophophat, 1-Ethyl-3-methyl-imidazolium tetrafluoroborat oder 1-Butyl-3-methyl-imidazolium chlorid, oder auch organische Lösemittel sein, bevorzugt ausgewählt aus Dichlormethan, Chloroform, Diethylether, Ethylacetat, Toluol oder Hexan. Die Freisetzung kann auch ohne Zugabe eines weiteren organischen Lösemittels oder Wasser erfolgen, die Abtrennung erfolgt dann z.B. über Phasenseparation; hierbei kann eine wässrige Lösung des Hydroxylammoniumsalzes mit der Base umgesetzt werden oder aber das Hydroxylamin wird einer wässrigen basischen Lösung zugegeben oder das Hydroxylammoniumsalz kann in einem organischen Lösemittel gelöst werden.

Die so dargestellten stickstoff-monosubstituierten Hydroxylamine oder deren Lösungen in organischen Lösemitteln können noch Reste der verwendeten Basen enthalten. Bezogen auf das stickstoff-monosubstituierten Hydroxylamin können bis zu 5 Gew.-%, bevorzugt weniger als 3 Gew.-%, weiter bevorzugt weniger als 1 Gew.-%, mehr bevorzugt weniger als 0,5 Gew.-% und insbesondere weniger als 0,1 bis größer 0 Gew.-% Base enthalten sein.

Gegebenenfalls kann ein Restgehalt in den oben genannten Grenzen bzw. ein Zusatz an Base in der Umsetzung mit den aldehyd-funktionellen Polysiloxanen vorteilhaft sein.

Die erfindungsgemäße Umsetzung wird vorzugsweise so durchgeführt, dass ein Umsatz von 85 %, vorzugsweise 90 %, insbesondere bevorzugt 95 % an Keto- bzw. Aldehyd-Gruppen zu Nitron-Gruppen erzielt wird.

Die erfindungsgemäße Umsetzung kann bei einer Temperatur von 10 bis 200 °C, vorzugsweise von 20 bis 100 °C, bevorzugt von 25 bis 40 °C durchgeführt werden.

Die erfindungsgemäße Umsetzung kann vorzugsweise bei einem Druck von 0,5 bis 20 bar, bevorzugt 1 bis 5 bar, insbesondere bevorzugt bei Normaldruck durchgeführt werden.

Die erfindungsgemäße Umsetzung kann vorzugsweise bei einem pH-Wert von 3 bis 10, bevorzugt von 4 bis 9, besonders bevorzugt von 5 bis 8 durchgeführt werden.

Die erfindungsgemäße Umsetzung kann in Gegenwart oder in Abwesenheit von einer oder mehreren Basen erfolgen. Vorzugsweise erfolgt die Umsetzung in Gegenwart von 0 bis 30 Gew.-%, bevorzugt von größer 0 bis 10 Gew.-% und besonders bevorzugt von 0,1 bis 5 Gew.-% bezogen auf die Reaktionsmischung.

Als Basen eignen sich anorganische Basen, bevorzugt Alkali- oder Erdalkalihydroxide, Alkali- oder Erdalkalicarbonate, oder organische Basen wie beispielsweise aliphatische oder aromatische Aminoverbindungen, wie z.B. Derivate von Pyridin, Imidazol, Pyrrolidin oder Pyrrol oder tertiäre Amine wie gleich oder unterschiedlich substituierte Trialkylamine, bevorzugt Triethylamin.

Die erfindungsgemäße Umsetzung kann sowohl bei Tageslicht als auch unter Lichtausschluss, vorzugsweise unter Lichtausschluss durchgeführt werden.

Das ggf. mit fortlaufender Umsetzung entstehende Wasser kann kontinuierlich durch Trockenmittel, Membranverfahren oder Destillation aus der Reaktionsmischung entfernt oder aber nach beendeter Reaktion abgetrennt werden.

Die erhaltenen siliziumhaltigen Polymere enthaltend mindestens eine Nitrongruppe können direkt verwendet oder aufgearbeitet werden. Die Aufarbeitung kann z. B. mittels Extraktion und anschließender Filtration gegebenenfalls unter Verwendung von Filterhilfsmitteln erfolgen. Zur Extraktion geeignete Lösungsmittel des erfindungsgemäßen Verfahrens sind Wasser oder organische Lösemittel oder ein oder mehrphasige Mischungen daraus. Als organische Lösemittel eignen sich z. B. Ethylacetat, Butylacetat, Ethylmethylketon, Xylol, Toloul, Chloroform, Dichlormethan, Hexan, Petrolether, Diethylether, Polyether oder ionische Flüssigkeiten.

Als siliziumhaltige Polymere, die ein oder mehrere Aldehyd- oder Ketogruppen aufweisen, können alle entsprechenden Verbindungen eingesetzt werden. Diese Verbindungen können wie im Stand der Technik beschrieben hergestellt werden.

Vorzugsweise werden siliziumhaltige Polymere, die ein oder mehrere Aldehyd- oder Ketogruppen aufweisen, durch Umsetzung eines mindestens eine SiH-Gruppe aufweisenden Polysiloxans mit einer, mindestens eine C-C-mehrfach Bindung, vorzugsweise Doppelbindung, sowie mindestens eine Keto- oder Aldehydgruppe aufweisenden Verbindung erhalten. Die Umsetzung kann z. B. als Hydrosilyierung durchgeführt werden. Die Hydrosilylierung kann z. B. wie in EP1520870 beschrieben durchgeführt werden.

Als Katalysatoren für die Hydrosilylierungsreaktion können z. B. Platinverbindungen, wie beispielsweise Hexachloroplatinsäure, cis-Platin, Bis-(cycloocten)Platindichlorid, carbo-Platin, Platin(0)-(divinyltetramethyldisiloxan)-Komplexe, sogenannte Karstedt-Katalysatoren, oder auch mit unterschiedlichen Olefinen komplexierte Platin(0)-Komplexe, eingesetzt werden. Des Weiteren eignen sich prinzipiell Rhodium-, Iridium- und Rutheniumverbindungen, wie beispielsweise Tris(triphenylphosphin)-Rhodium(I)chlorid oder Tris(triphenylphosphin)-Rhuthenium(II)dichlorid. Im Sinne des erfindungsgemäßen Verfahrens bevorzugte Katalysatoren sind Platin(0)-Komplexe. Besonders bevorzugt sind Karstedt-Katalysatoren oder sogenannte WK-Katalysatoren, die gemäß EP1520870 hergestellt werden können.

Die Katalysatoren werden vorzugsweise in einer Menge von 0,1 bis 1000 ppm, besonders bevorzugt 1 bis 100 ppm und insbesondere bevorzugt 5 bis 30 ppm bezogen auf den Gesamtansatz der Hydrosilylierungsreaktion eingesetzt.

Als SiH-Gruppe aufweisende Polysiloxane können bei der Herstellung der Keto- oder Aldehydgruppen aufweisenden Siloxane, insbesondere bei der Übergangsmetall-katalysierten Hydrosilylierung alpha, omega-SiH-Siloxane, seitenständige Di- oder Polyhydrogensiloxane und/oder end- und seitenständig SiHfunktionelle Polysiloxane eingesetzt werden. Die Umsetzung erfolgt vorzugsweise mit aliphatisch ungesättigten Aldehyden oder Ketonen wie beispielsweise Allyloxybenzaldehyd, 3-Vinylbenzaldehyde, Acrolein, 10-Undecenal, 5-Norbomene-2-carboxaldehyde, Allylacetone, 4-Allyloxy-2-hydroxybenzophenone. Die Reaktion wird vorzugsweise bei einer Temperatur von 20 bis 200 °C, bevorzugt bei 23 bis 150 °C und besonders bevorzugt bei 70 bis 100 °C durchgeführt. Die Reaktion kann bei Unter-, Über- oder Normaldruck durchgeführt werden, bevorzugt wird die Reaktion bei Normaldruck und insbesondere bei Normaldruck und den bevorzugten Temperaturen durchgeführt.

Das Hydrosilylierungsverfahren mit vollständigen Umsätzen, d.h. von 99%, vorzugsweise 99,9%, mehr bevorzugt 99,999%, insbesondere 99,999999% wird vorzugsweise wie im Stand der Technik, beispielsweise in der EP 1520870, beschrieben durchgeführt.

Bevorzugt wird die Umsetzung, insbesondere die Hydroisilylierung mit einem molaren Verhältnis von Si-H Gruppen zu olefinischen Doppelbindungen der Aldehyd- und/oder Keto-Gruppen tragenden Verbindungen von 1 zu 1 oder 1 zu größer 1 durchgeführt. Vorzugsweise beträgt das molare Verhältnis von 1 zu 1,1 bis 1 zu 2,5, bevorzugt von 1 zu 1,5 bis 1 zu 2.

Die im Hydrosilylierungsschritt verwendeten SiH-funktionellen Polysiloxane können z. B. gemäß dem Stand der Technik wie beispielsweise in der EP 1439200 beschrieben hergestellt werden.

Dem Fachmann ist geläufig, dass die für die Hydrosilylierung geeigneten Katalysatoren in Gegenwart spezieller Substanzen niedrigere Ausbeuten liefern, bzw. die katalytische Reaktion auch zum Stillstand kommen kann; solche Substanzen werden häufig als Katalysatorgifte bezeichnet. Derartige Substanzen sind Thiole oder Mercaptane, z.B. Phosphor (III)-Verbindungen, wie z.B. Trialkylphosphine oder Säuren, z.B. anorganische Säuren wie Chlorwasserstoff (in Gegenwart von Wasser also Salzsäure), z.B. organische Säuren wie Essigsäure. Aminoverbindungen wie auch anorganische oder organische Basen sind im Sinne dieser Reaktion nicht ausschließlich Katalysatorgift, sondern reagieren ihrerseits auch mit der entsprechenden Carbonylverbindung. Im erfindungsgemäß bevorzugten Hydrosilylierungsschritt sollten Katalysatorgifte in der Reaktionsmischung nicht enthalten sein, d.h. ihre Konzentration sollte jeweils unter 1 % (w/w), bevorzugt unter 0,1%(w/w), weiter bevorzugt unter 0,01 %(w/w), insbesondere unter 1 ppm bezogen auf die Reaktionsmischung liegen.

Als ein weiterer Teilschritt des erfindungsgemäßen Verfahrens kann eine anschließende Destillation bzw. Aufreinigung der Hydrosilylierungsprodukte vorteilhaft sein. Die Destillation bzw. Aufreinigung kann z. B. mit Hilfe eines Dünnschichtverdampfer, vorzugsweise bei einer Temperatur von 20 bis 250 °C, bevorzugt 50 bis 180 °C und besonders bevorzugt 100 bis 150 °C erfolgen. Der Druck beträgt dabei vorzugsweise von 0 bis 0,02 bar, bevorzugt von größer 0 bis 0,1 bar und besonders bevorzugt von 0,000001 bis 0,001 bar. Die Destillation bzw. Aufarbeitung kann insbesondere zur Abtrennung von überschüssigen Ketouind/oder Aldehydgruppen aufweisenden Olefinen vorteilhaft sein.

Es kann vorteilhaft sein, wenn die Herstellung der siliziumhaltigen Polymere, die ein oder mehrere Aldehyd- oder Ketogruppen enthalten, vor der erfindungsgemäßen Umsetzung in einem vorangehenden Verfahrensschritt als Teil des erfindungsgemäßen Verfahrens durchgeführt wird.

Beide Verfahrensschritte (Herstellung eines siliziumhaltigen Polymer, das ein oder mehrere Aldehyd- oder Ketogruppen enthält (1. Verfahrensschritt), und Umsetzung des siliziumhaltigen Polymer, das ein oder mehrere Aldehyd- oder Ketogruppen enthält mit einem stickstoff-monosubstituierten Hydroxylamin (2. Verfahrensschritt)) können in dem erfindungsgemäßen Verfahren sowohl als Eintopfreaktion, als aufeinander folgende getrennt durchgeführte Schritte oder auch dosierkontrolliert, vorzugsweise als Eintopfreaktion durchgeführt werden. Die Reaktion kann in einem Batch, Semi-batch oder kontinuierlichen Verfahren durchgeführt werden.

Die erfindungsgemäßen nitrontragenden Polymere können gegebenenfalls auch nach einem anderen Verfahren als dem erfindungsgemäßen Verfahren hergestellt werden, auch diese Reaktionsprodukte sind ausdrücklich von der vorliegenden Erfindung eingeschlossen.

Besonders vorteilhaft ist die hohe SiC-Selektivität des erfindungsgemäßen Verfahrens bei der Platin(0)-katalysierten Hydrosilylierung von aldehydhaltigen Olefinen. Dies ist überraschend, da Hydrosilylierungen von Carbonyl-Doppelbindungen im Stand der Technik bekannt sind (THL 48, 2007, 2033-2036). Die im Stand der Technik bekannte Bildung von hydrolyselabilen SiOC-Bindungen als unerwünschte Nebenreaktion bei der edelmetallkatalysierten Hydrosilylierung von aldehydfunktionellen olefinisch ungesättigten Verbindungen wird im erfindungsgemäßen 1. Verfahrensschritt unterdrückt.

Ein weiterer Vorteil des erfindungsgemäßen Verfahrens ist die mögliche Herstellung der siliziumhaltigen Polymeren enthaltend mindestens eine Nitrongruppe in einem Syntheseschritt (Eintopfverfahren). So kann die Herstellung des siliziumhaltigen Polymers, das ein oder mehrere Aldehyd- oder Ketogruppen enthält, und die Umsetzung des siliziumhaltigen Polymer, das ein oder mehrere Aldehyd- oder Ketogruppen enthält mit einem stickstoff-monosubstituierten Hydroxylamin konsekutiv in ein und demselben Reaktor durchgeführt werden, ohne dass eine Aufarbeitung zwischen den Stufen erfolgen muss.

Mittels des erfindungsgemäßen Verfahrens können z. B. die erfindungsgemäßen siliziumhaltigen Polymere, enthaltend mindestens eine Nitrongruppe, hergestellt werden.

Die erfindungsgemäßen siliziumhaltige Polymere, enthaltend mindestens eine Nitrongruppe, können z. B. zur Herstellung von erfindungsgemäßen Zubereitungen verwendet werden. Die erfindungsgemäßen Zubereitungen, zeichnen sich dadurch aus, dass sie die erfindungsgemäßen siliziumhaltigen Polymeren enthaltend mindestens eine Nitrongruppe enthalten. Die erfindungsgemäßen Zubereitungen können weitere Zusatzstoffe wie z. B. Sikkative, Verlaufsmittel, Farben und/oder Farbpigmente, Benetzungsmittel, Bindemittel, Reaktivverdünner, Tenside, thermisch aktivierbare Initiatoren, Photoinitiatoren, Katalysatoren, Emollients, Emulgatoren, Antioxidantien, Hydrotrope (oder Polyole), Fest- und Füllstoffe, Perlglanzadditive, Insektrepellentien, Anti-Foulingmittel, Nukleierungsmittel, Konservierungsstoffe, optische Aufheller, Flammschutzmittel, Antistatika, Treibmittel, Weichmacher, Parfüme, Wirkstoffe, Pflegeadditive, Überfettungsmittel, Lösungsmittel und/oder Viskositätsmodulatoren enthalten. Bevorzugte Zusätze sind Farben und/oder Farbpigmente.

Die erfindungsgemäßen Polymere, die erfindungsgemäß hergestellten Polymere und/oder die erfindungsgemäßen Zubereitungen können z. B. zur Herstellung von oder als Beschichtungsmittel oder Druckfarben verwendet werden.

Bevorzugt enthalten die erfindungsgemäßen Zubereitungen jedoch keine Emulgatoren oder Stabilisatoren.

Die erfindungsgemäßen Zubereitungen zeichnen sich durch ihre besonders gute Lagerstabilität aus. Die Zubereitungen sind über lange Zeit ohne Phasenseparation lagerbar, das bedeutet, dass sie vor ihrer Verwendung zu Beschichtungszwecken keiner weiteren mechanischen Behandlung, insbesondere Rührprozessen unterworfen werden müssen. Typische Lagerzeiten der erfindungsgemäßen Zubereitungen bei Raumtemperatur sind 3 Jahre, bevorzugt 2 Jahre, mehr bevorzugt ein Jahr und insbesondere 3 Monate. Eine Phasenseparation darf zu höchsten 5 Vol%, bevorzugt höchstens 1 Vol% und insbesondere kleiner 1 Vol% nach der in den Beispielen angegeben Berechnung bei Raumtemperatur vorliegen.

Vorzugsweise weisen die Zubereitungen von 0,1 bis 99 Gew.-% der erfindungsgemäßen siliziumhaltigen Polymeren enthaltend mindestens eine Nitrongruppe bzw. der erfindungsgemäß hergestellten Polymere, bevorzugt 0,5 bis 10 Gew.-% und insbesondere 1 bis 3 Gew.-% bezogen auf die Zubereitung auf. Die Zubereitung weist vorzugsweise mindestens ein Bindemittel auf. Vorzugsweise sind das eine oder mehrere Bindemittel Polymere, welche Doppelbindungen und/oder weitere funktionelle Gruppen wie z.B. Hydroxyl, Amin, Mercaptan, Aldehyd, Keton, Nitril, Ether, Thioether, Imine, Hydrzine, Phophit, Phosphat, Epoxy, Isocyanat, Ester, Amid, Lacton, Lactam, Imid, Urethan, Harnstoff, aufweisen, vorzugsweise weist das Bindemittel Acrylgruppen auf. Vorzugsweise weisen die Zubereitungen das Bindemittel mit einem Anteil von 60 bis 99 Gew.-%, bevorzugt von 70 bis 98 Gew.-%, besonders bevorzugt von 80 bis 97 Gew.-% und insbesondere bevorzugt von 90 bis 96 Gew.-% bezogen auf die Zubereitung auf. Vorzugsweise weisen die Zubereitungen von 0,01 bis 5 Gew. %, bevorzugt von 0,1 bis 4 Gew. %, besonders bevorzugt 0,5 bis 3 Gew. % und insbesondere 0,9 bis 3 Gew. % an Zusatzstoffen, insbesondere die oben genannten, bezogen auf die Zubereitung auf.

Vorzugsweise weisen die erfindungsgemäßen Zubereitungen enthaltend die erfindungsgemäßen siliziumhaltigen Polymeren enthaltend mindestens eine Nitrongruppe bzw. der erfindungsgemäß hergestellten Polymere und das Bindemittel, jeweils in ihren bevorzugten Gewichtsanteilen, und optional einen oder mehrere Zusatzstoffe, ebenfalls in seinen bevorzugten Gewichtsanteilen eine Viskosität von unter 40000 mPa·s, bevorzugt unter 10000 mPa·s, weiterhin bevorzugt unter 5000 mPa·s, mehr bevorzugt unter 1000 mPa·s und insbesondere unter 500 mPa·s auf.

Die erfindungsgemäßen siliziumhaltigen Polymere, enthaltend mindestens eine Nitrongruppe, wie auch die erfindungsgemäßen Zubereitungen eignen sich insbesondere zur Herstellung von bedruckten oder beschichteten Flächen.

Hierbei können beliebige Materialien bedruckt oder beschichtet werden, bevorzugte Materialien sind Textilien, Holz, Stein, Keramik, Glas, Metall, Papier, Kunststoffe.

Die mit den erfindungsgemäßen Zubereitungen hergestellten beschichteten, wie z.B. bedruckten oder lackierten Oberflächen zeichnen sich durch bessere oder zumindest ebenso gute Werte bei der Nagelprobe nach Wasserlagerung, im Abreiß-Test und im Release-Test aus.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Ausführungsbeispiele:

### Allgemeine Methoden und Materialien

### NMR:

Die Aufnahme und Interpretation der NMR-Spektren ist dem Fachmann bekannt ("NMR Spectra of Polymers and Polymer Additives" von A. Brandolini und D. Hills, 2000, Marcel Dekker. Inc.).

Die Spektren wurden mit einem Bruker Spectrospin Spektrometer bei Raumtemperatur aufgenommen, die Messfrequenz betrug bei der Aufnahme der Protonenspektren 400 MHz. Im Protonenpspektrum werden z.B. die Signale des Aldehyds (CHO) bei etwa 9,9 ppm und das Signal des Nitrons (CHNR-O) bei etwa 7,3 ppm ausgewertet. Der Umsatz hinsichtlich aller Wasserstoff tragenden Siliziumatome (SiH-Wert) kann sowohl durch die Auswertung des SiH Signals mittels ¹H-NMR Spektroskopie(.delta. = 0 bis 12 ppm), als auch über ²⁹Si-NMR .Spektroskopie (.delta. = -5 - bis -10 bzw. -30 bis -40 ppm) erfolgen.

### Viskosität:

Die Viskositäten wurden mit einem Rotationsviskosimeter Brookfield Synchro-Lectric der Firma Brookfield (Gerätetyp LVT) und der Spindel LV 2 in Anlehnung an die DIN 5391 bestimmt.

Brookfield-Viskosimeter sind Rotationsviskosimeter mit definierten Spindelsätzen als Rotationskörper. Bei den verwendeten Rotationskörper n handelte es sich um einen LV-Spindelsatz. Aufgrund der Temperaturabhängigkeit der Viskosität wurde die Temperaturen von Viskosimeter und Messflüssigkeit während der Messung auf +/-0,5 °C genau konstant gehalten bei 23 °C. Weitere verwendete Materialien neben dem LV-Spindelsatz waren ein thermostatisierbares Wasserbad, ein Thermometer 0-100°C (Skalenteile 1 °C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50% (+/- 20%) des maximal messbaren Drehmoments erfolgte. Das Ergebnis der Messung wurde am Display des Viskosimeters in mPas ausgegeben, wobei die Division durch die Dichte (g/ml) die Viskosität in mm²/s liefert.

Die Angabe der Zusammensetzungen gemäß Formel (I) in den folgenden Beispielen sind numerische Mittelwerte und beziehen sich auf die berechnete Molmasse Mn.

### Materialien:

EBECRYL® ist ein eingetragenes Warenzeichen der Firma Cytec Industries, Inc., New Jersey, USA. Die Produkte EBECRYL 450 und 812 sind Polyesteracrylate, EBECRYL 220 ist ein aromatisches Urethanacrylat.

BYK® ist ein eingetragenes Warenzeichen der Firma BYK-Chemie GmbH, Wesel. Das Produkt UV 3510 ist ein Polyether modifiziertes Polydimethylsiloxan.

Die eingesetzten Karstedt-Lösungen sind Platin(0)-Divinyltetramethyldisiloxankomplexe in Decamethylcyclopentasiloxan in der Konzentration von 0,1 Gew.-% Platin (erhältlich bei Umicore mit 21,37 Gew.-% Platin, welches durch Verdünnen mit Decamethylcyclopentasiloxan auf 0,1 Gew.-% Pt eingestellt wird).

### Beispiel 1: Herstellung der erfindungsgemäßen-Siloxannitrone

### Synthesebeispiel S1 (UL-5478+UL-5481): M³₂D¹₇₈

100 g eines alpha, omega-Dihydrogenpolydimethylsiloxans (M=6667 g/mol) mit einem SiH-Wert von 0,3 val SiH/kg wurden zu einer Mischung aus 7 g 4-Allyloxybenzaldehyd (erhältlich bei Sigma Aldrich, Bestell. Nr. 544396, 97 %) und 0,11 g einer 1 Gew.-%igen Karstedt-Lösung befüllten Vierhalskolben, ausgestattet mit einem KPG-Blatt-Rührer, einem Innenthermometer, einem Tropftrichter und einem Rückflusskühler unter Rühren bei 70 °C innerhalb von 30 Minuten zugetropft. Die Mischung wurde für eine weitere Stunde bei 80 °C gerührt. Der experimentell bestimmte SiH-Wert wies auf einen vollständigen Umsatz der SiH-Gruppen hin. Der überschüssige 4-Allyloxybenzaldehyd wurde mehrmals mit Methanol ausgewaschen. Anschließend wurden 70 g des Hydrosilylierungsproduktes mit 1,65 g N-Methylhydroxylamin (hergestellt aus 3,0 g N-Methylhydroxylamin*HCl Salz (erhältlich bei der Firma Sigma Aldrich, Bestell. Nr. M50400, 98 %) und 3,6 g Triethylamin) gelöst in 15 ml Dichlormethan bei Raumtemperatur über Nacht gerührt. Es folgte eine 3-fache Extraktion mit einem Diethylether/Wasser Gemisch (1:1 Vol.) mit anschließender Trocknung mit Natriumsulfat. Das Lösemittel wurde am Rotationsverdampfer (40°C) entfernt und das Produkt im Vakuum (1 mbar/ 40 °C) getrocknet. Aus dem ¹H-NMR-Spektrum war ein vollständiger Umsatz der Aldehydgruppen zu den entsprechenden Nitronen nachweisbar.

### Synthesebeispiel S2 (UL-5508): M³₂D³₃D¹₇₅

125 g eines Polymethylhydrogensiloxans (M = 5882 g/mol) mit einem SiH-Wert von 0,85 val SiH/kg wurden zu einer Mischung aus 18,73 g 4-Allyloxybenzaldehyd (erhältlich bei Sigma Aldrich, Bestell. Nr. 544396, 97 %) und 0,14 g einer 1 gew. proz. Karstedt-Lösung befüllten Vierhalskolben, ausgestattet mit einem KPG-Rührer, einem Innenthermometer, einem Tropftrichter und einem Rückflusskühler unter Rühren bei 80 °C innerhalb von 30 Minuten zugetropft. Die Mischung wurde für 4 Stunden bei 80 °C gerührt. Anschließend wurden weitere 0,14 g einer 1 gew. proz. Karstedt-Lösung zugegeben und für weitere 2 Stunden bei 80 °C gerührt. Der experimentell bestimmte SiH-Wert wies auf einen vollständigen Umsatz der SiH-Gruppen hin. Das überschüssige 4-Allyloxybenzaldehyd (Siedepkt.: 152°C bei 24 mbar) wurde mit Hilfe eines Dünnschichtverdampfers abgetrennt. Anschließend wurde das Hydrosilylierungsprodukt mit dem Filtrat der Suspension aus 100 mL Dichlormethan, 10,55 g N-Methylhydroxylamin*HCl (erhältlich bei der Firma Sigma Aldrich, Bestell. Nr. M50400, 98 %) und 12,7 g Triethylamin versetzt und bei Raumtemperatur über Nacht gerührt. Es folgte eine 3-fache Extraktion mit einem Diethylether/Wasser-Gemisch (1:1 Vol.) mit anschließender Trocknung mit Natriumsulfat. Das Lösemittel wurde am Rotationsverdampfer (40°C) entfernt und das Produkt im Vakuum (1 mbar/ 40 °C) getrocknet. Aus dem ¹H-NMR-Spektrum war ein vollständiger Umsatz der Aldehydgruppen zu den entsprechenden Nitronen nachweisbar.

### Synthesebeispiel S3 (UL-5508): M³₂D³₆D¹₂₀₀

125 g eines Pentahydrogenpolydimethylsiloxans (M = 15385 g/mol) mit einem SiH-Wert von 0,52 val SiH/kg wurden zu einer Mischung aus 13,2g 4-Allyloxybenzaldehyd (erhältlich bei Sigma Aldrich, Bestell. Nr. 544396, 97 %) und 0,14 g einer 1 gew. proz. Karstedt-Lösung befüllten Vierhalskolben, ausgestattet mit einem KPG-Rührer, einem Innenthermometer, einem Tropftrichter und einem Rückflusskühler unter Rühren bei 80°C innerhalb von 30 Minuten zugetropft. Die Mischung wurde für 1,5 Stunden bei 80 °C gerührt. Anschließend wurden weitere 0,14 g einer 1 gew. proz. Karstedt-Lösung zugegeben und für weitere 3,5 Stunden bei 80 °C gerührt. Der experimentell bestimmte SiH-Wert wies auf einen vollständigen Umsatz der SiH-Gruppen hin. Das überschüssige 4-Allyloxybenzaldehyd (Siedepkt.: 152°C bei 24 mbar) wurde mittels eines Dünnschichtverdampfers abgetrennt. Anschließen wurde das Hydrosilylierungsprodukt mit dem Filtrat der Suspension aus 80 mL Dichlormethan, 7,38 g N-Methylhydroxylamin*HCl (erhältlich bei der Firma Sigma Aldrich, Bestell. Nr. M50400, 98 %) und 8,9 g Triethylamin versetzt und bei Raumtemperatur über Nacht gerührt. Es folgte eine 3-fache Extraktion mit einem Diethylether/Wasser (1:1 Vol.) Gemisch mit anschließender Trocknung mit Natriumsulfat. Das Lösemittel wurde am Rotationsverdampfer (40 °C) entfernt und das Produkt im Vakuum (1 mbar/ 40 °C) getrocknet. Aus dem ¹H-NMR-Spektrum war ein vollständiger Umsatz der Aldehydgruppen zu den entsprechenden Nitronen nachweisbar.

### Synthesebeispiel S4 (GP-O-113): M³₂D³₄D¹₇₈

32,5 g eines 1,3,5,7-Tetramethylcyclotetrasiloxane (erhältlich bei der Firma abcr, 95 %) wurden zu einer Mischung aus 67,5 g Styrol (erhältlich bei Sigma Aldrich, >99 %) und 0,1 mL einer 1 gew. proz. Karstedt-Lösung befüllten Vierhalskolben, ausgestattet mit einem KPG-Rührer, einem Innenthermometer, einem Tropftrichter und einem Rückflusskühler unter Rühren bei 60 °C innerhalb von 70 Minuten zugetropft. Die Mischung wurde für weitere 5 Stunden bei 70 °C gerührt. Der experimentell bestimmte SiH-Wert wies auf einen vollständigen Umsatz der SiH-Gruppen hin. Das überschüssige Styrol wurde mittels eines Rotationsverdampfers bei 100 °C und 3 mbar entfernt.

23,7 g dieser Verbindung wurden mit 206 g eines alpha, omega-Dihydrogenpolydimethylsiloxans (M=6667 g/mol) mit einem SiH-Wert von 0,3 val SiH/kg und 0,23 g Trifluormethansulfonsäure (erhältlich bei Sigma Aldrich, 98 %) in einem Vierhalskolben, ausgestattet mit einem KPG-Rührer, einem Innenthermometer und einem Rückflusskühler bei 25 °C für 5 Stunden gerührt. Anschließend wurden 116 mL Toluol zugegeben und bei 60 °C für weitere 5 Stunden gerührt. Anschließend wurden 4,6 g Natriumhydrogencarbonat (erhältlich bei der Firma J.T. Baker) zugegeben, filtriert und bei 110 °C und 3 mbar destilliert.

183,1 g dieses styrolhaltigen Siloxans mit einem SiH-Wert von 0,22 val SiH/kg wurden zu einer Mischung aus 7,8 g 4-Allyloxybenzaldehyd (erhältlich bei Sigma Aldrich, Bestell. Nr. 544396, 97 %) und 0,1 mL einer 1 gew. proz. Karstedt-Lösung befüllten Vierhalskolben, ausgestattet mit einem KPG-Rührer, einem Innenthermometer, einem Tropftrichter und einem Rückflusskühler unter Rühren bei 80 °C innerhalb von 10 Minuten zugetropft. Die Mischung wurde für eine weitere Stunde bei 80 °C gerührt. Der experimentell bestimmte SiH-Wert wies auf einen vollständigen Umsatz der SiH-Gruppen hin. Das überschüssige 4-Allyloxybenzaldehyd (Siedepkt.: 152°C bei 24 mbar) wurde mit Hilfe eines Dünnschichtverdampfers abgetrennt. Anschließend wurde das Hydrosilylierungsprodukt mit 3,9 g N-Methylhydroxylamin*HCl (erhältlich bei der Firma Sigma Aldrich, Bestell. Nr. M50400, 98 %), 4,9 g Natriumcarbonat (erhältlich bei der Firma KMF, reinst) und 1,5 g Natriumsulfat (erhältlich bei der Firma Merck, reinst) versetzt und bei Raumtemperatur über Nacht gerührt. Dann wurde mit n-Hexan verdünnt und Filterhilfe zugegeben und mit einem Tiefenfilter K 200 mit einer Dicke von 3,9 mm der Firma Pall Corporation filtriert und schließlich bei 50°C und 3 mbar destilliert. Aus dem ¹H-NMR-Spektrum war ein vollständiger Umsatz der Aldehydgruppen zu den entsprechenden Nitronen nachweisbar.

### Synthesebeispiel S5 (GP-O-111): M³₂D³₄D¹₇₈

22,9 g eines 1,3,5,7-Tetramethylcyclotetrasiloxane (erhältlich bei der Firma abcr, 95 %) wurden zu einer Mischung aus 77,1 g Dodecen (erhältlich bei Sigma Aldrich, >99 %) und 0,1 mL einer 1 gew. proz. Karstedt-Lösung befüllten Vierhalskolben, ausgestattet mit einem KPG-Rührer, einem Innenthermometer, einem Tropftrichter und einem Rückflusskühler unter Rühren bei 60 °C innerhalb von 70 Minuten zugetropft. Die Mischung wurde für eine weitere Stunde bei 70 °C gerührt. Der experimentell bestimmte SiH-Wert wies auf einen vollständigen Umsatz der SiH-Gruppen hin. Das überschüssige Dodecen wurde mittels eines Rotationsverdampfers bei 100 °C und 3 mbar entfernt.

25,5 g dieser Verbindung wurden mit 159,5 g eines alpha, omega-Dihydrogenpolydimethylsiloxans (M=6667 g/mol) mit einem SiH-Wert von 0,3 val SiH/kg und 0,19 g Trifluormethansulfonsäure (erhältlich bei Sigma Aldrich, 98 %) in einem Vierhalskolben, ausgestattet mit einem KPG-Rührer, einem Innenthermometer und einem Rückflusskühler bei 25 °C für 5 Stunden gerührt. Anschließend wurden 115 mL Toluol zugegeben und bei 60 °C für weitere 5 Stunden gerührt. Anschließend wurden 4,6 g Natriumhydrogencarbonat (erhältlich bei der Firma J.T. Baker) zugegeben, filtriert und bei 110 °C und 3 mbar destilliert.

136,7 g dieses dodecenhaltigen Siloxans mit einem SiH-Wert von 0,22 val SiH/kg wurden zu einer Mischung aus 5,4 g 4-Allyloxybenzaldehyd (erhältlich bei Sigma Aldrich, Bestell. Nr. 544396, 97 %) und 0,1 mL einer 1 gew. proz. Karstedt-Lösung befüllten Vierhalskolben, ausgestattet mit einem KPG-Rührer, einem Innenthermometer, einem Tropftrichter und einem Rückflusskühler unter Rühren bei 80 °C innerhalb von 10 Minuten zugetropft. Die Mischung wurde für weitere 1,5 Stunden bei 80 °C gerührt. Der experimentell bestimmte SiH-Wert wies auf einen vollständigen Umsatz der SiH-Gruppen hin. Das überschüssige 4-Allyloxybenzaldehyd (Siedepkt.: 152°C bei 24 mbar) wurde mit Hilfe eines Dünnschichtverdampfers abgetrennt. Anschließend wurde das Hydrosilylierungsprodukt mit 3,0 g N-Methylhydroxylamin*HCl (erhältlich bei der Firma Sigma Aldrich, Bestell. Nr. M50400, 98 %), 3,8 g Natriumcarbonat (erhältlich bei der Firma KMF, reinst) und 1,2 g Natriumsulfat (erhältlich bei der Firma Merck, reinst) versetzt und bei Raumtemperatur über Nacht gerührt. Dann wurde mit n-Hexan verdünnt und Filterhilfe zugegeben und mit einem Tiefenfilter K 200 mit einer Dicke von 3,9 mm der Firma Pall Corporation filtriert und schließlich bei 50°C und 3 mbar destilliert. Aus dem ¹H-NMR-Spektrum war ein vollständiger Umsatz der Aldehydgruppen zu den entsprechenden Nitronen nachweisbar.

### Synthesebeispiel S6 (GP-O-105): M³₂D¹₇₈

579 g eines alpha, omega-Dihydrogenpolydimethylsiloxans (M=6667 g/mol) mit einem SiH-Wert von 0,3 val SiH/kg wurden zu einer Mischung aus 40 g 4-Allyloxybenzaldehyd (erhältlich bei Sigma Aldrich, Bestell. Nr. 544396, 97 %) und 0,6 mL einer 1 gew. proz. Karstedt-Lösung befüllten Vierhalskolben, ausgestattet mit einem KPG-Rührer, einem Innenthermometer, einem Tropftrichter und einem Rückflusskühler unter Rühren bei 70 °C innerhalb von 60 Minuten zugetropft. Die Mischung wurde für weitere 3,4 Stunden bei 70 °C gerührt. Der experimentell bestimmte SiH-Wert wies auf einen vollständigen Umsatz der SiH-Gruppen hin. Das überschüssige 4-Allyloxybenzaldehyd (Siedepkt.: 152°C bei 24 mbar) wurde mit Hilfe eines Dünnschichtverdampfers abgetrennt. Anschließend wurde 72,2 g des Hydrosilylierungsproduktes mit 3,0 g N-Cyclohexylhydroxylamin*HCl (erhältlich bei der Firma Sigma Aldrich, 97 %), 3,4 g Natriumcarbonat (erhältlich bei der Firma KMF, reinst) und 2,1 g Natriumsulfat (erhältlich bei der Firma Merck, reinst) versetzt und bei Raumtemperatur über Nacht gerührt. Dann wurde mit n-Hexan verdünnt und Filterhilfe zugegeben und mit einem Tiefenfilter K 200 mit einer Dicke von 3,9 mm der Firma Pall Corporation filtriert und schließlich bei 50°C und 3 mbar destilliert. Aus dem ¹H-NMR-Spektrum war ein vollständiger Umsatz der Aldehydgruppen zu den entsprechenden Nitronen nachweisbar.

### Synthesebeispiel S7 (GP-O-105): M³₂D¹₇₈

42 g des Hydrosilylierungsproduktes aus Synthesebeispiel S6 mit 3,0 g N-Benzylhydroxylamin*HCl (erhältlich bei der Firma Sigma Aldrich, 97 %), 3,4 g Natriumcarbonat (erhältlich bei der Firma KMF, reinst) und 2,1 g Natriumsulfat (erhältlich bei der Firma Merck, reinst) versetzt und bei Raumtemperatur über Nacht gerührt. Dann wurde mit n-Hexan verdünnt und Filterhilfe zugegeben und mit einem Tiefenfilter K 200 mit einer Dicke von 3,9 mm der Firma Pall Corporation filtriert und schließlich bei 50°C und 3 mbar destilliert. Aus dem ¹H-NMR-Spektrum war ein vollständiger Umsatz der Aldehydgruppen zu den entsprechenden Nitronen nachweisbar.

### Synthesebeispiel S8

300 g eines alpha, omega Hydrogenpolydimethylsiloxans (M = 5556 g/mol) mit einem SiH-Wert von 0,36 val SiH/kg wurden zu einer Mischung aus 19,98 g Undecylenaldehyd (erhältlich bei Sigma Aldrich, Bestell. Nr. 132276, 95 %) und 0,32 g einer 1 gew. proz. Karstedt-Lösung befüllten Vierhalskolben, ausgestattet mit einem KPG-Rührer, einem Innenthermometer, einem Tropftrichter und einem Rückflusskühler unter Rühren bei 80 °C innerhalb von 1 Stunde zugetropft. Nach 2,5 und 6 Stunden wurden jeweils weitere 0,16 g einer 1 gew. proz. Karstedt-Lösung hinzugegeben. Die Mischung wurde insgesamt für weitere 10 Stunden bei 80 °C gerührt. Der experimentell bestimmte SiH-Wert wies auf einen vollständigen Umsatz der SiH-Gruppen hin. Das überschüssige Undecylenaldehyd (Siedepkt.: 100 °C bei 5 mbar) wurde für 2 Stunden bei 120°- 125 °C bei 3 mbar abdestilliert. Anschließend wurde das Hydrosilylierungsprodukt mit dem Filtrat der Suspension aus 20 g Dichlormethan, 1,7 g N-Methylhydroxylamin*HCl (erhältlich bei der Firma Sigma Aldrich, Bestell. Nr. M50400, 98 %) und 2,1 g Triethylamin versetzt und bei Raumtemperatur über Nacht gerührt. Es folgte anschließend eine Filtration mit einem Faltenfilter. Dann wurde das Dichlormethan abdestilliert und abschließend ein weiteres Mal filtriert. Es entsteht ein klares viskoses Produkt. Aus dem ¹H-NMR-Spektrum war ein vollständiger Umsatz der Aldehydgruppen zu den entsprechenden Nitronen nachweisbar.

### Beispiel 2: Herstellung von erfindungsgemäßen Zubereitungen und Vergleichszubereitungen

Es wurden die in Tabellen 1 und 2 angegebenen Zubereitungen durch Mischen der Komponenten hergestellt. Zusätzlich wurde ein Blindprobe B3 auf Basis der Zubereitung A3 ohne Additiv hergestellt.

**Tabelle 1: Zusammensetzungen der erfindungsgemäßen Zubereitungen gemäß Beispiel 2**

| | Bindemittel | Additiv |
|---|---|---|
| Z1 | 56,4 g EBECRYL® 450 | 3,6 g Additiv S1 |
| Z2 | 56,4 g EBECRYL® 220 | 3,6 g Additiv S1 |
| Z3 | 56,4 g UV-Offset (Zeller + Gmelin) | 3,6 g Additiv S1 |
| Z4 | 56,4 g EBECRYL® 812 | 3,6 g Additiv S1 |

**Tabelle 2: Zusammensetzungen der nicht erfindungsgemäßen Zubereitungen gemäß Beispiel 2**

| | Bindemittel | Additiv |
|---|---|---|
| A1 | 56,4 g EBECRYL® 450 | 3,6 g BYK®-UV 3510 |
| A2 | 56,4 g EBECRYL® 220 | 3,6 g BYK®-UV 3510 |
| A3 | 56,4 g UV-Offset (Zeller + Gmelin) | 3,6 g BYK®-UV 3510 |
| A4 | 56,4 g EBECRYL® 812 | 3,6 g BYK®-UV 3510 |

### B3: 56,4 g UV-Offset (Zeller + Gmelin), ohne Additiv als Blindvergleich

### Beispiel 3: Verwendung von Zubereitungen als Additiv für UV-härtbare Beschichtungen

Die Applikation der Zubereitungen erfolgte mit einer Offsetwalze. Dabei wurden die Zubereitungen Z3, A3 und B3 aus Beispiel 2 auf eine PET-Folie gegeben und mit der Offsetwalze gleichmäßig verteilt. Mit der mit Farbe benetzten Offsetwalze wurde nun eine weitere PET-Folie benetzt, welche die Probenfolie darstellte. Es wurde eine gleichmäßige Farbschicht auf der PET-Folie erzeugt.

Die Härtung der Farbe erfolgte bei Raumtemperatur und für 1 Sekunde pro Durchgang an einer IST-UV-Anlage mit einer Quecksilberdampf-UV-Lampe M 300 K 2 H und einem Strahlenspektrum von 180 - 450 nm bei 120 W/cm und 10 m/min mit 4 Durchgängen auf der Oberseite und 2 Durchgängen auf der Rückseite.

### Beispiel 4: Bestimmung der Eigenschaften der Zubereitungen gemäß Beispiel 2

Die Messung der Viskosität erfolgte wie oben beschrieben.

**Tabelle 3: Viskositäten (gemäß Beispiel 4) der Zubereitungen (gemäß Beispiel 2)**

| Bindemittel | Viskosität [mPa*s] | Zubereitungen | Viskosität [mPa*s] |
|---|---|---|---|
| EBECRYL® 450 | 8278 | Z1 | 11100 |
| EBECRYL® 220 | 18600 | Z2 | 19500 |
| EBECRYL® 812 | 8000 | Z4 | 10500 |

### Lagerstabilität:

Die Zubereitungen Z1 - Z4 und A1 - A4 gemäß Beispiel 2 wurden 60 Min. bei 9.000 U/min am Dispermaten gerührt. Anschließend wurden die Proben im Trockenschrank 14 Tage bei 50 °C bzw. 3 Monate bei Raumtemperatur gelagert. Nach der Lagerung wurden die Zubereitungen auf Raumtemperatur abgekühlt und visuell auf Phasenseparation beurteilt.

Das separierte Volumen der oberen Phase wurde im Verhältnis zum eingesetzten Volumen (Gesamtvolumen des Additivs in der Zubereitung) des Additivs betrachtet und nachfolgend qualifiziert:

| | | |
|---|---|---|
| +++ | exzellent | (keine Phasenseparation, 0 Vol.%), |
| ++ | sehr gut | (10 Vol.%), |
| + | gut | (30 Vol.%), |
| o | befriedigend | (50 Vol.%), |
| - | schlecht | (vollständige Phasenseparation, 100 Vol.%) |
| nd | nicht bestimmt worden | |

**Tabelle 4: Ergebnisse der Lagerstabilitätstests gemäß Beispiel 4**

| Zubereitung | Lagerstabilität | | Zubereitung | Lagerstabilität |
|---|---|---|---|---|
| | 14 d, 50°C | 3m,RT | | |
| Z1 | +++ | +++ | A1 | - |
| Z2 | +++ | +++ | A2 | - |
| Z3 | +++ | nd | A3 | + |
| Z4 | +++ | nd | A4 | - |

### Beispiel 5: Bestimmung der Eigenschaften von Beschichtungen gemäß Beispiel 3

### Wasserlagerung:

Die Probenfolienstücke wurden in Wasser eingelegt, sodass die gesamte Lackfläche mit Wasser benetzt wurde. Dort wurden sie für 3 Stunden belassen.

### Abreiß-Test:

Ein Tesa®-Streifen der Firma Tesa wurde mit kräftigem Druck per Hand auf die Lackfläche aufgetragen, 24 bzw. 3 Stunden dort belassen und dann mit einem Ruck abgerissen. Blieb Farbe am Klebeband haften, war dies negativ zu bewerten. Je deutlicher dieser Effekt war, desto schlechter die Qualität.

### Release-Test:

Per Hand wurden auf jede Probenfolie zwei Tesa(R)-Streifen auf die fett- und staubfreie Probenfolie aufgeklebt, 24 h dort belassen und im Anschluss mit dem Instron 3342 maschinell mit einer gleichmäßigen Geschwindigkeit von 15 mm/sek. abgelöst, wobei die dafür benötigte Kraft gemessen wurde. Je niedriger die benötigte Kraft war, desto besser war die Release-Wirkung. Die Angabe der Kraft erfolgte in cN.

### Nagelprobe:

Mit dem Daumennagel wurde der Lack auf den PET-Probenfolien einzuritzen versucht. Je nachdem wie leicht dies gelang, war die Probe zu bewerten, wobei galt: je leichter, desto schlechter. Dieser Versuch wurde vor und nach der Wasserlagerung durchgeführt

**Tabelle 5: Ergebnisse der Anwendungstests gemäß Beispiel 5**

| Kriterium | B3 | A3 | Z3 |
|---|---|---|---|
| Nagelprobe (3 h) | ++ / ++ | ++ / ++ | +++ / +++ |
| Tesa-Test (24 h) | -/- | ++/++ | +++ / +++ |
| Tesa-Test (3 h) | ++ / ++ | ++ / ++ | +++ / +++ |
| Release [cN] | > 1700 | 67 | 78 |

| | | | |
|---|---|---|---|
| Ergebnisse jeweils vor / nach der Wasserlagerung, +++ exzellent, ++ sehr gut, + gut, o befriedigend, - schlecht | | | |

Es ist klar ersichtlich, dass nitrontragende Polysiloxane hervorragend als Oberflächenadditiv für UV-Offsetfarben geeignet sind. Sie zeichnen sich durch eine exzellente Mischbarkeit mit den unterschiedtichen Bindemittelsystemen und hervorragenden Lagerstabilität aus. Der Releasewert entspricht dem von Standard Marktprodukten.

## Patentansprüche

1. Siliziumhaltige Polymere enthaltend mindestens eine Nitrongruppe **dadurch gekennzeichnet, dass** die Polymere Siloxannitrone der Formel (I) sind
M1ₐ₁M²ₐ₂M³ₐ₃D¹_{b1}D²_{b2}D³_{b3}T_{c}Q_{d} (I)
mit
M¹ = [R¹₃SiO_{1/2}]
M² = [R²R¹₂SiO_{1/2}]
M³ = [R³R¹₂SiO_{1/2}]
D¹ = [R¹₂SiO_{2/2}]
D² = [R¹R²SiO_{2/2}]
D³ = [R¹R³SiO_{2/2}]
T = [R¹SiO_{3/2}]
Q = [SiO_{4/2}]
wobei
a1 0 bis 50, bevorzugt <10, insbesondere 0;
a2 0 bis 50, bevorzugt <10, insbesondere 0;
a3 0 bis 50, bevorzugt 1-30, insbesondere >0;
b1 10 bis 5000, bevorzugt 10 bis 1000, insbesondere 10 bis 500;
b2 0 bis 50, bevorzugt 0 bis 25, insbesondere 0;
b3 0 bis 50, bevorzugt 0 bis 25, insbesondere >0;
c 0 bis 50, bevorzugt 0 bis 10, insbesondere 0;
d 0 bis 50, bevorzugt 0 bis 10, insbesondere 0;
mit der Maßgabe, dass mindestens einer der Indices a3 und b3 größer 0, vorzugsweise größer 1 ist;
R¹ = unabhängig voneinander gleiche oder verschiedene lineare oder verzweigte, gesättigte oder ungesättigte Kohlenwasserstoffreste mit 1 bis 30 Kohlenstoffatomen oder aromatische Kohlenwasserstoffreste mit 6 bis 30 Kohlenstoffatomen,
bevorzugt Alkylreste mit 1 bis 14 Kohlenstoffatomen oder monocylische Aromaten,
mehr bevorzugt Methyl, Ethyl, Propyl oder Phenyl, insbesondere bevorzugt Methyl;
R² = unabhängig voneinander gleiche oder verschiedene, lineare oder verzweigte, gesättigte oder ungesättigte Kohlenwasserstoffreste, welche Stickstoff- oder Sauerstoffatome aufweisen können, bevorzugte Kohlenwasserstoffreste sind Alkylreste mit 1 bis 30 Kohlenstoffatomen,
die mit ein oder mehreren Hydroxyfunktionen und/oder stickstofftragenden Gruppen substituiert sein können,
wobei die stickstofftragenden Gruppen in quaternärer Form als Ammoniumgruppen vorliegen können,
die mit einer Epoxidgruppe substituiert sein können, und/oder die mit ein oder mehreren Carboxyl-, Aminosäure-, Betain- und/oder Estergruppen substituiert sein können,
oder ein Arylrest mit 6 bis 30 Kohlenstoffatomen
oder ein Polyoxyalkylenrest der Formel (IV), 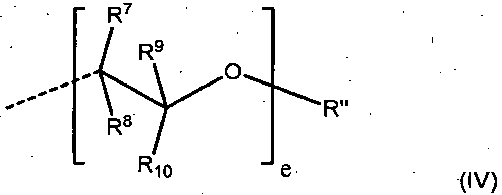 worin
e gleich 1 bis 150, bevorzugt 2 bis 100, mehr bevorzugt größer 2, insbesondere 3 bis 20 ist,
R⁷ oder R⁸, sowie R⁹ oder R¹⁰ gleich oder auch unabhängig voneinander Wasserstoff, einwertiger Alkylreste mit 1 bis 12 Kohlenstoffatomen und/oder Arylreste mit 6 bis 12 Kohlenstoffatomen sind,
welche gegebenenfalls auch weiter mit Hydroxy-, Methoxy-, Ethoxy-, Methyl- und/oder Ethylgruppen substituiert sein können,
oder R⁷ und R⁹, sowie unabhängig davon R⁸ und R¹⁰ können gemeinsam einen Ring bilden, der die Atome an die R⁷ und R⁹, beziehungsweise R³ und R¹⁰ gebunden sind einschließt, oder R⁷ und R⁸ sowie unabhängig davon R⁹ und R¹⁰ können gemeinsam einen Ring bilden, der die Atome an die R⁷ und R⁸ beziehungsweise R⁹ und R¹⁰ gebunden sind einschließt,
wobei diese Ringe gegebenenfalls auch weiter mit Hydroxy-, Methoxy-, Ethoxy-, Methyl- und/oder Ethylgruppen substituiert
sein können und/oder gesättigt und/oder ungesättigt sein können,
wobei die einzelnen Fragmente mit dem Index e innerhalb des Polyoxyalkylenrests der Formel (IV) untereinander verschieden vorliegen können und dabei statistisch verteilt sind,
R^{II} unabhängig voneinander Wasserstoffrest, substituiertes oder unsubstituiertes C₁-C₄-Alkyl, -C(O)NH-R^{I},-C(O)O-R^{I}, -C(Q)-R^{III} mit
R^{III} substituierte oder unsubstituierte C₁-C₁₂-Alkyl -CH₂-O-R^{I}, substituierte oder unsubstituierte C₆-C₁₂-Arylgruppe bevorzugt eine Benzylgruppe, bedeutet,
R^{I} unabhängig voneinander substituierte oder unsubstituierte C₁-C₁₂-Alkyl, substituierte oder unsubstituierte C₆-C₁₂-Arylgruppe, substituierte oder unsubstituierte C₆-C₃₀Alkaryl
bevorzugt ist R²
-CH₂-CH₂-CH₂-O-(CH₂-CH₂O-)ₓ-(CH₂-CH(R^{I})O-)_{y}-R^{II},
-CH₂-CH₂-O-(CH₂-CH₂O-)ₓ-(CH₂-CH(R¹)O-)_{y}-R^{II},
-CH₂-CH₂-CH₂-O-CH₂-CH(OH)-CH₂OH,
-CH₂-CH₂-(O)_{x'}-CH₂-R^{IV}, -CH₂-R^{IV}, oder
-CH₂-CH₂-CH₂-O-CH₂-C(CH₂OH)₂-CH₂-CH₃,
worin
x 0 bis 100, vorzugsweise > 0, insbesondere 1 bis 50,
x' 0 oder 1,
y 0 bis 100, vorzugsweise > 0, insbesondere 1 bis 50,
bevorzugt sind x + y gleich 1 bis 50, mehr bevorzugt größer 1, insbesondere 2 bis 20,
R^{I}, R^{II} und R^{III} wie oben definiert und
R^{IV} C₁-C₅₀-Alkyl, cyclisches C₁-C₅₀-Alkyl, vorzugsweise C₉-C₄₅-Alkyl, cyclisches C₉-C₄₅-bevorzugt C₁₃-C₃₇-Alkyl, cyclisches C₁₃-Alkyl;
R³ = unabhängig voneinander gleiche oder verschiedene Reste der Formel (II) 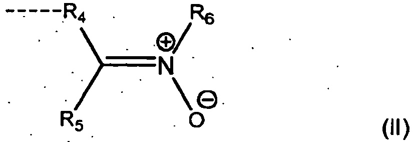 worin
R⁴ ein an das Siloxan gebundener, zweiwertiger, beliebiger organischer Rest,
bevorzugt substituiertes, oder unsubstituiertes, verzweigtes oder unverzweigtes C₁-C₃₀-Alkylen, welches auch durch Heteroatome unterbrochen sein kann und im Falle der Unterbrechung durch Stickstoff dieser auch quaternisiert sein kann, cyclisches C₃-C₃₀-Alkylen, substituiertes oder unsubstituiertes C₁-C₃₀-Alkylenoxy, substituiertes oder unsubstituiertes C₆-C₃₀-Arylen, substituiertes oder unsubstituiertes C₆-C₃₀-Arylenoxy, substituiertes oder unsubstituiertes C₁-C₁₂-Alken-C₆-C₁₂-Arylen, welches auch durch Heteroatome unterbrochen sein kann und im Falle der Unterbrechung durch Stickstoff dieser auch quaternisiert sein kann, und Sulfate, Chloride und Carboxylate, insbesondere Citrate, Lactate, Stearate und Acetate als Gegenionen tragen, insbesondere ein Rest der Formeln IIIa bis IIIi ist; 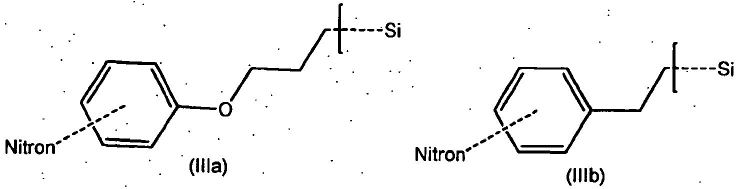 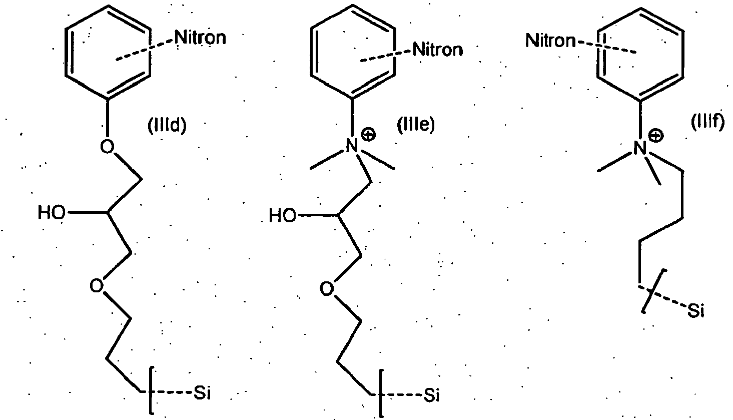 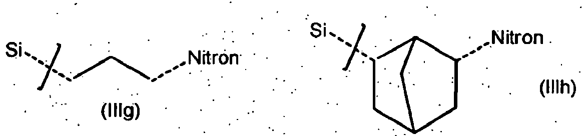 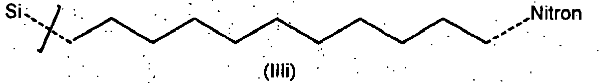 mit Nitron gleich einem Rest der Formel (II), wobei Si das Siloxan darstellt;
R⁵ Wasserstoff, substituiertes oder unsubstituiertes C₁-C₃₀-Alkyl, substituiertes oder unsubstituiertes C₆-C₃₀-Aryl, substituiertes oder unsubstituiertes C₆-C₃₀-Heteroaryl, substituiertes oder unsubstituiertes C₁-C₁₂-Alk- C₆-C₁₂-Aryl, substituiertes oder unsubstituiertes C₁-C₃₀-Alkyloxy, substituiertes oder unsubstituiertes cyclisches C₃-C₃₀-Alkyl, vorzugsweise Wasserstoff oder substituiertes oder unsubstituiertes C₁-C₂₀ Alkyl
oder R⁵ ist ein Rest wie R⁴, wobei die Zusammensetzungen von R⁵ und R⁴ nicht identisch sein müssen;
R⁶ substituiertes oder unsubstituiertes C₁-C₃₀-Alkyl, substituiertes oder unsubstituiertes C₆-C₃₀-Aryl, substituiertes oder unsubstituiertes C₆-C₃₀-Heteroaryl, substituiertes oder unsubstituiertes C₁-C₁₂-Alk- C₆-C₁₂-Aryl, substituiertes oder unsubstituiertes C₁-C₃₀-Alkyloxy, substituiertes oder unsubstituiertes cyclisches C₃-C₃₀-Alkyl, vorzugsweise substituiertes oder unsubstituiertes C₁-C₂₀ Alkyl.

2. Polymere nach Anspruch 1, **dadurch gekennzeichnet, dass** die Indices a3 = 2 und b3 = 0 sind.

3. Polymere nach Anspruch 1, **dadurch gekennzeichnet dass**
die Indices a1 = 0, a2 = 0, a3 = 2, b1 = 10 bis 500, b2 = 0, b3 = 0, c = 0, d = 0, sind,
R¹ eine Methylgruppe, beide Reste R³ gleich sind und jeweils ein Rest der Formel (II) sind, wobei
R⁴ ein para-substituierter Rest der Formel (IIIa) und R⁵ ein Wasserstoffatom und R⁶ eine Methylgruppe sind.

4. Verfahren zur Herstellung von siliziumhaltigen Polymeren enthaltend mindestens eine Nitrongruppe bei dem ein siliziumhaltiges Polymer, das ein oder mehrere Aldehyd- oder Ketogruppen enthält mit einem stickstoff-monosubstituierten Hydroxylamin umgesetzt wird.

5. Verfahren nach Anspruch 4 bei dem das siliziumhaltige Polymer, welches ein oder mehrere Aldehyd- oder Ketogruppen enthält, ein Siloxan ist.

6. Verfahren nach den Ansprüchen 4 und 5 bei dem ein stickstoffmonosubstituiertes Hydroxylamin mit einem aldehyd-funktionellen Polysiloxan umgesetzt wird.

7. Verfahren nach den Ansprüchen 5 oder 6 bei dem als aldehyd-funktionelles Siloxan, ein Siloxan eingesetzt wird, welches durch Hydrosilylierung eines SiH-funktionellen Silxans durch einen terminal olefinischen Aldehyd hergestellt wurde.

8. Verfahren nach den Ansprüchen 4 bis 7 bei dem in einem ersten Verfahrensschritt ein SiH-funktionelles Polysiloxan durch Hydrosilylierung in Gegenwart eines Karstedtkatalysators bei Temperaturen von 20 bis 200°C mit einem aliphatischen terminal olefinischen Aldehyd umgesetzt wird und in einem zweiten Verfahrensschritt das Reaktionsprodukt des ersten Verfahrensschrittes mit einem stickstoff-monosubstituierten Hydroxylamin bei Temperaturen von 20 bis 200°C umgesetzt wird.

9. Verfahren nach einem der Ansprüche 4 bis 8, **dadurch gekennzeichnet, dass** Polymere gemäß einem der Ansprüche 1 bis 3 hergestellt werden.

10. Verwendung der Polymere gemäß einem der Ansprüche 1 bis 3 oder hergestellt nach einem der Ansprüche 4 bis 9 zur Herstellung von Zubereitungen.

11. Verwendung nach Anspruch 10, **dadurch gekennzeichnet, dass** die Zubereitungen, von 0,1 bis 99 % (w/w), bevorzugt 0,5 bis 10 %(w/w), insbesondere 1 bis 3 %(w/w) der siliziumhaltigen Polymere enthaltend mindestens eine Nitrongruppe enthält, bezogen auf die Zubereitung und mindestens ein weiteres Polymer, welches Doppelbindungen und oder weitere funktionelle Gruppen enthält, welches bevorzugt Acrylgruppen enthalten.

12. Verwendung nach Anspruch 10 oder 11, **dadurch gekennzeichnet, dass** weitere Zusätze wie Sikkative, Verlaufsmittel, Farben und/oder Farbpigmente, Benetzungsmittel, Bindemittel, Reaktivverdünner, Tenside, thermisch aktivierbare Initiatoren, Photoinitiatoren, Katalysatoren, Emollients, Emulgatoren, Antioxidantien, Hydrotrope (oder Polyole), Fest- und Füllstoffe, Perlglanzadditive, Insektrepellentien, Anti-Foulingmittel, Nukleierungsmittel, Konservierungsstoffe, optische Aufheller, Flammschutzmittel, Antistatika, Treibmittel, Weichmacher, Parfüme, Wirkstoffe, Pflegeadditive, Überfettungsmittel, Lösungsmittel und/oder Viskositätsmodulatoren enthalten sind.

13. Zubereitung, **dadurch gekennzeichnet, dass** sie von 0,1 bis 99 Gew. %, bevorzugt 0,5 bis 10 Gew. %, insbesondere 1 bis 3 Gew. % bezogen auf die Zubereitung an nitronhaltigen Polymeren gemäß einem der Ansprüche 1 bis 3 oder hergestellt gemäß einem der Ansprüche 4 bis 9 enthält und mindestens ein weiteres Polymer enthält, welches Doppelbindungen und/oder weitere funktionelle Gruppen enthält, welches bevorzugt Acrylgruppen enthält.

14. Zubereitungen nach Anspruch 13, deren Viskosität unter 5000 mPa·s liegt.

15. Zubereitungen nach einem der Ansprüche 13 bis 14, **dadurch gekennzeichnet, dass** diese Beschichtungsmittel oder Druckfarben sind.

## Claims

1. Silicon-containing polymers containing at least one nitrone group, **characterized in that** the polymers are siloxane nitrones of formula (I)
M¹ₐ₁M²ₐ₂M³ₐ₃D¹_{b1}D²_{b2}D³_{b3}T_{c}Q_{d} (I)
where
M¹ = [R¹₃SiO_{1/2}]
M² = [R²R¹₂SiO_{1/2}]
M³ = [R³R¹₂SiO_{1/2}]
D¹ = [R¹₂SiO_{2/2}]
D² = [R¹R²SiO_{2/2}]
D³ = [R¹R³SiO_{2/2}]
T = [R¹SiO_{3/2}]
Q = [SiO_{4/2}]
where
a1 from 0 to 50, preferably <10, especially 0;
a2 from 0 to 50, preferably <10, especially 0;
a3 from 0 to 50, preferably 1-30, especially > 0; b1 from 10 to 5000, preferably from 10 to 1000, especially from 10 to 500;
b2 from 0 to 50, preferably from 0 to 25, especially 0;
b3 from 0 to 50, preferably from 0 to 25, especially > 0;
c from 0 to 50, preferably from 0 to 10, especially 0;
d from 0 to 50, preferably from 0 to 10, especially 0;
with the proviso that at least one of the indices a3 and b3 is greater than 0, preferably greater than 1;
R¹ represents independently in each occurrence identical or different linear or branched, saturated or unsaturated hydrocarbon radicals of 1 to 30 carbon atoms or aromatic hydrocarbon radicals of 6 to 30 carbon atoms,
preferably alkyl radicals of 1 to 14 carbon atoms or monocyclic aromatics,
more preferably methyl, ethyl, propyl or phenyl,
most preferably methyl;
R² represents independently in each occurrence identical or different, linear or branched, saturated or unsaturated hydrocarbon radicals which may comprise nitrogen or oxygen atoms, preferred hydrocarbon radicals being alkyl radicals of 1 to 30 carbon atoms,
which may be substituted with one or more hydroxyl functions and/or nitrogen-bearing groups,
wherein the nitrogen-bearing groups may be in the quaternary form of ammonium groups,
which may be substituted with an epoxide group,
and/or which may be substituted with one or more carboxyl, amino acid, betaine and/or ester groups,
or an aryl radical of 6 to 30 carbon atoms or a polyoxyalkylene radical of formula (IV), 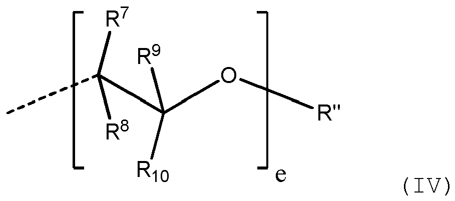 where
e is from 1 to 150, preferably from 2 to 100, more preferably greater than 2 and especially from 3 to 20,
R⁷ or R⁸ and also R⁹ or R¹⁰ in each occurrence are the same or different and independently represent hydrogen, monovalent alkyl radicals of 1 to 12 carbon atoms and/or aryl radicals of 6 to 12 carbon atoms,
which may optionally also be further substituted with hydroxyl, methoxy, ethoxy, methyl and/or ethyl groups,
or R⁷ and R⁹ and also independently thereof R⁸ and R¹⁰ may combine to form a ring which includes the atoms to which R⁷ and R⁹ on the one hand and R⁸ and R¹⁰ on the other are bonded,
or R⁷ and R⁸ and also independently thereof R⁸ and R¹⁰ may combine to form a ring which includes the atoms to which R⁷ and R⁸ on the one hand and R⁹ and R¹⁰ on the other are bonded,
wherein these rings may optionally also be further substituted with hydroxyl, methoxy, ethoxy, methyl and/or ethyl groups and/or be saturated and/or unsaturated,
wherein the individual fragments with the index e may differ from each other within the polyoxyalkylene radical of formula (IV) while forming a random distribution,
R^{II} in each occurrence independently represents a hydrogen radical, substituted or unsubstituted C₁-C₄-alkyl, -C(O)NH-R^{I}, -C(O)O-R^{I}, -C(O)-R^{III} where
R^{III} represents substituted or unsubstituted C₁-C₁₂-alkyl, -CH₂-O-R^{I}, substituted or unsubstituted C₆-C₁₂-aryl, preferably a benzyl group,
R^{I} in each occurrence independently represents substituted or unsubstituted C₁-C₁₂-alkyl, substituted or unsubstituted C₆-C₁₂-aryl, substituted or unsubstituted C₆-C₃₀-alkaryl
R² is preferably
-CH₂-CH₂-CH₂-O- (CH₂-CH₂O-)ₓ-(CH₂-CH (R^{I})O-)_{y}-R^{II},
-CH₂-CH₂-O-(CH₂-CH₂O-)ₓ-(CH₂-CH(R^{I})O-)_{y}-R^{II},
-CH₂-CH₂-CH₂-O-CH₂-CH (OH) -CH₂OH,
-CH₂-CH₂- (0)_{x'}-CH₂-R^{IV}, -CH₂-R^{IV}, or
-CH₂-CH₂-CH₂-O-CH₂-C (CH₂OH)₂-CH₂-CH₃, where
x is from 0 to 100, preferably > 0, especially from 1 to 50,
x' is 0 or 1,
y is from 0 to 100, preferably > 0, especially from 1 to 50,
x + y are preferably from 1 to 50, more preferably greater than 1, especially from 2 to 20,
R^{I}, R^{II} and R^{III} are each as defined above, and R^{IV} represents C₁-C₅₀-alkyl, cyclic C₁-C₅₀-alkyl, preferably C₉-C₄₅-alkyl, cyclic C₉-C₄₅-preferably C₁₃-C₃₇-alkyl, cyclic C₁₃-alkyl;
R³ represents independently in each occurrence identical or different radicals of formula (II) 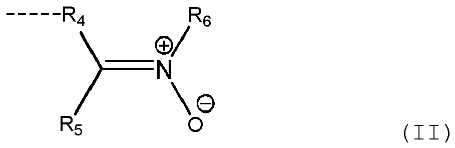 where
R⁴ represents a divalent discretional organic radical bonded to the siloxane, unbranched C₁-C₃₀-alkylene which may also be interrupted by heteroatoms and in the case of interruption by nitrogen this nitrogen may also be quaternized, cyclic C₃-C₃₀-alkylene, substituted or unsubstituted C₁-C₃₀-alkyleneoxy, substituted or unsubstituted C₆-C₃₀-arylene, substituted or unsubstituted C₆-C₃₀-aryleneoxy, substituted or unsubstituted C₁-C₁₂-alkene-C₆-C₁₂-arylene, which may also be interrupted by heteroatoms and in the case of interruption by nitrogen this nitrogen may also be quaternized, and bear sulphates, chlorides and carboxylates, especially citrates, lactates, stearates and acetates as counter-ions, especially a radical of formulae IIIa to IIIi; 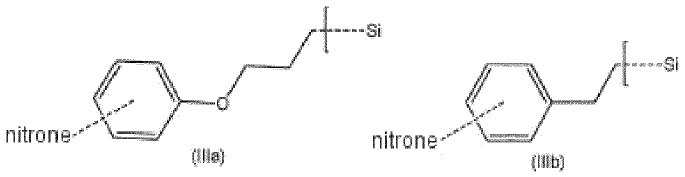 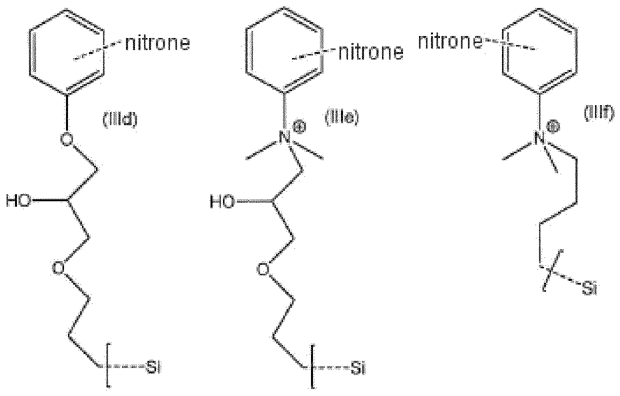 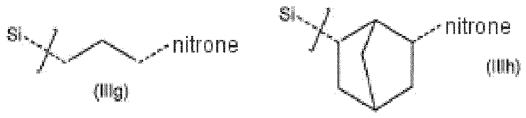 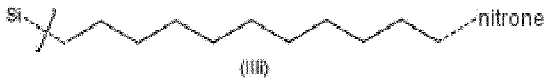 where nitrone is a radical of formula (II), where Si represents the siloxane;
R⁵ represents hydrogen, substituted or unsubstituted C₁-C₃₀-alkyl, substituted or unsubstituted C₆-C₃₀-aryl, substituted or unsubstituted C₆-C₃₀- heteroaryl, substituted or unsubstituted C₁-C₁₂-alk-C₆-C₁₂-aryl, substituted or unsubstituted C₁-C₃₀-alkyloxy, substituted or unsubstituted cyclic C₃-C₃₀-alkyl,
preferably hydrogen or substituted or unsubstituted C₁-C₂₀-alkyl
or R⁵ represents a radical such as R⁴, in which case the compositions of R⁵ and R⁴ need not be identical;
R⁶ represents substituted or unsubstituted C₁-C₃₀-alkyl, substituted or unsubstituted C₆-C₃₀-aryl, substituted or unsubstituted C₆-C₃₀-heteroaryl, substituted or unsubstituted C₁-C₁₂-alk-C₆-C₁₂-aryl, substituted or unsubstituted C₁-C₃₀-alkyloxy, substituted or unsubstituted cyclic C₃-C₃₀-alkyl,
preferably substituted or unsubstituted C₁-C₂₀-alkyl.

2. Polymers according to Claim 1, **characterized in that** the indices a3 are = 2 and b3 are = 0.

3. Polymers according to Claim 1, **characterized in that**
the indices are a1 = 0, a2 = 0, a3 = 2, b1 = 10 to 500, b2 = 0, b3 = 0, c = 0, d = 0,
R¹ represents a methyl group, the two R³ radicals are the same and each represents a radical of formula (II), where
R⁴ represents a para-substituted radical of formula (IIIa), R⁵ represents a hydrogen atom and R⁶ represents a methyl group.

4. Process for preparing silicon-containing polymers containing at least one nitrone group, which process comprises reacting a silicon-containing polymer containing one or more aldehyde or keto groups with a nitrogen-monosubstituted hydroxylamine.

5. Process according to Claim 4, wherein the silicon-containing polymer containing one or more aldehyde or keto groups is a siloxane.

6. Process according to Claims 4 and 5, wherein a nitrogen-monosubstituted hydroxylamine is reacted with an aldehyde-functional polysiloxane.

7. Process according to Claim 5 or 6, wherein the aldehyde-functional siloxane used is a siloxane obtained by hydrosilylating an SiH-functional siloxane with a terminally olefinic aldehyde.

8. Process according to Claims 4 to 7, wherein a first step comprises reacting an SiH-functional polysiloxane with an aliphatic terminally olefinic aldehyde at temperatures of 20 to 200°C by hydrosilylation in the presence of a Karstedt catalyst and
a second step comprises reacting the reaction product of the first step with a nitrogen-monosubstituted hydroxylamine at temperatures of 20 to 200°C.

9. Process according to any one of Claims 4 to 8, **characterized in that** polymers according to any one of Claims 1 to 3 are obtained.

10. Use of polymers according to any one of Claims 1 to 3 or obtained according to any one of Claims 4 to 9 in the manufacture of preparations.

11. Use according to Claim 10, **characterized in that** the preparations contain from 0.1 to 99% (w/w), preferably 0.5 to 10% (w/w),
especially 1 to 3% (w/w) of silicon-containing polymers containing at least one nitrone group, based on the preparation and at least one further polymer containing double bonds and/or further functional groups, the polymer preferably containing acryloyl groups.

12. Use according to Claim 10 or 11, **characterized in that** further additives are present such as siccatives, flow control agents, colours and/or colour pigments, wetting agents, binders, reactive diluents, surfactants, thermally activatable initiators, photoinitiators, catalysts, emollients, emulsifiers, antioxidants, hydrotropes (or polyols), solid and filler materials, pearl lustre additives, insect repellents, antifoulants, nucleators, preservatives, optical brighteners, flame retardants, antistats, blowing agents, plasticizers/softeners, perfumes, active ingredients, care additives, superfatting agents, solvents and/or viscosity modulators.

13. Preparation, **characterized in that** it contains from 0.1 to 99 wt%, preferably 0.5 to 10 wt%, especially 1 to 3 wt% based on the preparation of nitrone-containing polymers according to any one of Claims 1 to 3 or obtained according to any one of Claims 4 to 9 and at least one further polymer which contains double bonds and/or further functional groups, which preferably contains acryloyl groups.

14. Preparations according to Claim 13, the viscosity of which is below 5000 mPa·s.

15. Preparations according to either of Claims 13 and 14, **characterized in that** these are coatings or printing inks.

## Revendications

1. Polymères contenant du silicium contenant au moins un groupe nitrone, **caractérisés en ce que** les polymères sont des siloxane-nitrones de formule (I)
M¹ₐ₁M²ₐ₂M³ₐ₃D¹_{b1}D²_{b2}D³_{b3}T_{c}Q_{d} (I)
avec
M¹ = [R¹₃SiO_{1/2}]
M² = [R²R¹₂SiO_{1/2}]
M³ = [R³R¹₂SiO_{1/2}]
D¹ = [R¹₂SiO_{2/2}]
D₂ = [R¹R²SiO_{2/2}]
D³ = [R¹R³SiO_{2/2}]
T = [R¹SiO_{3/2}]
Q = [SiO_{4/2}]
avec
a1 0 à 50, de préférence < 10, notamment 0 ;
a2 0 à 50, de préférence < 10, notamment 0 ;
a3 0 à 50, de préférence 1 à 30, notamment > 0 ;
b1 10 à 5 000, de préférence 10 à 1 000, notamment 10 à 500 ;
b2 0 à 50, de préférence 0 à 25, notamment 0 ;
b3 0 à 50, de préférence 0 à 25, notamment > 0 ;
c 0 à 50, de préférence 0 à 10, notamment 0 ;
d 0 à 50, de préférence 0 à 10, notamment 0 ;
à condition qu'au moins un des indices a3 et b3 soit supérieur à 0, de préférence supérieur à 1 ;
R¹ = indépendamment les uns des autres, de manière identique ou différente, radicaux hydrocarbonés linéaires ou ramifiés, saturés ou insaturés, de 1 à 30 atomes de carbone, ou radicaux hydrocarbonés aromatiques de 6 à 30 atomes de carbone, de préférence radicaux alkyle de 1 à 14 atomes de carbone ou aromatiques monocycliques, de manière davantage préférée méthyle, éthyle, propyle ou phényle, de manière particulièrement préférée méthyle ;
R² = indépendamment les uns des autres, de manière identique ou différente, radicaux hydrocarbonés linéaires ou ramifiés, saturés ou insaturés, qui peuvent comprendre des atomes d'azote ou d'oxygène,
des radicaux hydrocarbonés préférés étant les radicaux alkyle de 1 à 30 atomes de carbone,
qui peuvent être substitués avec une ou plusieurs fonctions hydroxy et/ou un ou plusieurs groupes azotés,
les groupes azotés pouvant se présenter sous forme quaternaire en tant que groupes ammonium,
qui peuvent être substitués avec un groupe époxyde,
et/ou qui peuvent être substitués avec un ou plusieurs groupes carboxyle, acide aminé, bétaïne et/ou ester,
ou radical aryle de 6 à 30 atomes de carbone,
ou radical polyoxyalkylène de formule (IV) 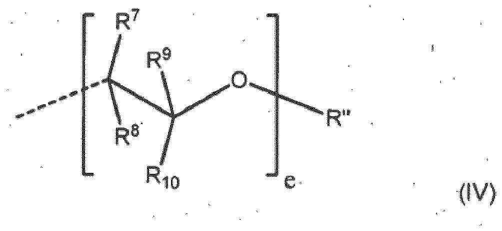 dans laquelle
e vaut 1 à 150, de préférence 2 à 100, de manière davantage préférée plus de 2, notamment 3 à 20,
R⁷ ou R⁸, ainsi que R⁹ ou R¹⁰, représentent de manière identique ou également indépendamment les uns des autres l'hydrogène, des radicaux alkyle monovalents de 1 à 12 atomes de carbone et/ou des radicaux aryle de 6 à 12 atomes de carbone,
qui peuvent éventuellement également être substitués avec des groupes hydroxy, méthoxy, éthoxy, méthyle et/ou éthyle,
ou R⁷ et R⁹, ainsi qu'indépendamment R⁸ et R¹⁰, peuvent former ensemble un cycle qui comprend les atomes auxquels R⁷ et R⁹, ou respectivement R⁸ et R¹⁰, sont reliés,
ou R⁷ et R⁸, ainsi qu'indépendamment R⁹ et R¹⁰, peuvent former ensemble un cycle qui comprend les atomes auxquels R⁷ et R⁸, et respectivement R⁹ et R¹⁰, sont reliés,
ces cycles pouvant éventuellement également être substitués avec des groupes hydroxy, méthoxy, éthoxy, méthyle et/ou éthyle, et/ou pouvant être saturés et/ou insaturés,
les fragments individuels d'indice e pouvant être différents les uns des autres dans le radical polyoxyalkylène de formule (IV) et être répartis statistiquement,
les R^{II} représentent indépendamment les uns des autres un radical hydrogène, un alkyle en C₁-C₄ substitué ou non substitué, -C(O)NH-R^{I}, -C(O)O-R^{I}, -C(O)-R^{III} avec
R^{III} signifiant alkyle en C₁-C₁₂-CH₂-OR^{I} substitué ou non substitué, groupe aryle en C₆-C₁₂ substitué ou non substitué,
de préférence un groupe benzyle,
les R^{I} signifiant indépendamment les uns des autres alkyle en C₁-C₁₂ substitué ou non substitué, groupe aryle en C₆-C₁₂ substitué ou non substitué, alkaryle en C₆-C₃₀ substitué ou non substitué,
R² représentant de préférence
-CH₂-CH₂-CH₂-O- (CH₂-CH₂O-)ₓ-(CH₂-CH(R^{I})O-)_{y}R^{II},
-CH₂-CH₂-O-(CH₂-CH₂O-)ₓ-(CH₂-CH (R^{I})O-)_{y}R^{II},
-CH₂-CH₂-CH₂-O-CH₂-CH(OH)-CH₂OH,
-CH₂-CH₂-(O)ₓ-CH₂-R^{IV}, -CH₂-R^{IV} ou
-CH₂-CH₂-CH₂-O-CH₂-C(CH₂OH)₂-CH₂-CH₃,
avec
x 0 à 100, de préférence > 0, notamment 1 à 50,
x' 0 ou 1,
y 0 à 100, de préférence > 0, notamment 1 à 50,
x + y valant de préférence 1 à 50, de manière davantage préférée plus de 1, notamment 2 à 20,
R^{I}, R^{II} et R^{III} étant tels que définis précédemment et
R^{IV} représentant alkyle en C₁-C₅₀, alkyle en C₁-C₅₀ cyclique, de préférence alkyle en C₉-C₄₅, alkyle en C₉-C₄₅ cyclique, de préférence alkyle en C₁₃-C₃₇, alkyle en C₁₃ cyclique ;
R³ = indépendamment les uns des autres radicaux identiques ou différents de formule (II) 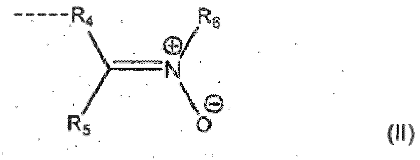 dans laquelle
R⁴ représente un radical organique bivalent quelconque relié au siloxane,
de préférence un alkylène en C₁-C₃₀ substitué ou non substitué, ramifié ou non ramifié, qui peut également être interrompu par des hétéroatomes et, dans le cas d'une interruption par un azote, celui-ci pouvant également être quaternisé, un alkylène en C₃-C₃₀ cyclique, un alkylénoxy en C₁-C₃₀ substitué ou non substitué, un arylène en C₆-C₃₀ substitué ou non substitué, un arylénoxy en C₆-C₃₀ substitué ou non substitué, un alcène en C₁-C₁₂-arylène en C₆-C₁₂ substitué ou non substitué, qui peut également être interrompu par des hétéroatomes et, dans le cas d'une interruption par de l'azote, celui-ci pouvant également être quaternisé, et porter des sulfates, chlorures et carboxylates, notamment des citrates, lactates, stéarates et acétates en tant que contre-ions, notamment un radical des formules IIIa à IIIi ; 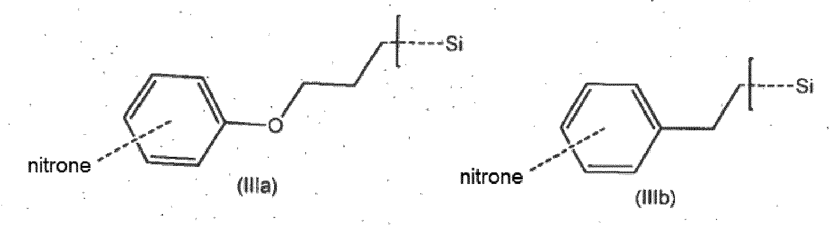 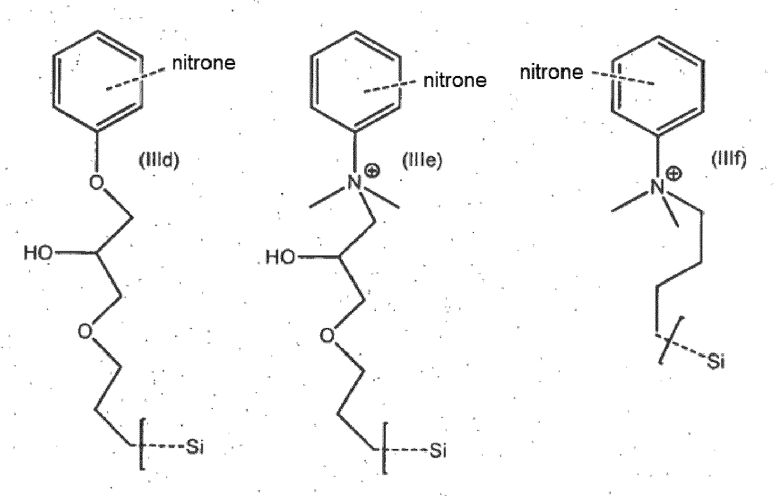 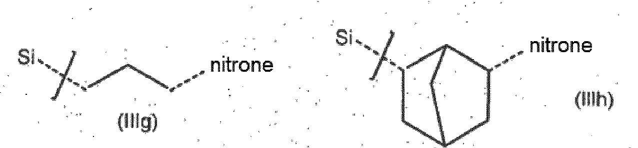 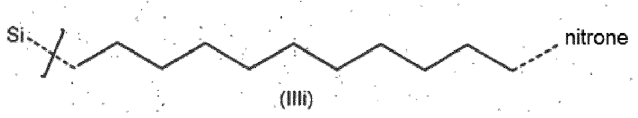 nitrone représentant un radical de formule (II), Si représentant le siloxane ;
R⁵ représente hydrogène, alkyle en C₁-C₃₀ substitué ou non substitué, aryle en C₆-C₃₀ substitué ou non substitué, hétéroaryle en C₆-C₃₀ substitué ou non substitué, alk en C₁-C₁₂-aryle en C₆-C₁₂ substitué ou non substitué, alkyloxy en C₁-C₃₀ substitué ou non substitué, alkyle en C₃-C₃₀ cyclique substitué ou non substitué,
de préférence hydrogène ou alkyle en C₁-C₂₀ substitué ou non substitué,
ou R⁵ représente un radical tel que R⁴, les compositions de R⁵ et R⁴ ne devant pas être identiques ;
R⁶ représente alkyle en C₁-C₃₀ substitué ou non substitué, aryle en C₆-C₃₀ substitué ou non substitué, hétéroaryle en C₆-C₃₀ substitué ou non substitué, alk en C₁-C₁₂-aryle en C₆-C₁₂ substitué ou non substitué, alkyloxy en C₁-C₃₀ substitué ou non substitué, alkyle en C₃-C₃₀ cyclique substitué ou non substitué, de préférence alkyle en C₁-C₂₀ substitué ou non substitué.

2. Polymères selon la revendication 1, **caractérisés en ce que** les indices a3 = 2 et b3 = 0.

3. Polymères selon la revendication 1, **caractérisés en ce que** les indices a1 = 0, a2 = 0, a3 = 2, b1 = 10 à 500, b2 = 0, b3 = 0, c = 0, d = 0,
R¹ représente un groupe méthyle, les deux radicaux R³ sont identiques et représentent chacun un radical de formule (II),
R⁴ représentant un radical para-substitué de formule (IIIa) et R⁵ représentant un atome d'hydrogène et R⁶ représentant un groupe méthyle.

4. Procédé de fabrication de polymères contenant du silicium contenant au moins un groupe nitrone, dans lequel un polymère contenant du silicium, qui contient un ou plusieurs groupes aldéhyde ou cétone, est mis en réaction avec une hydroxylamine monosubstituée par de l'azote.

5. Procédé selon la revendication 4, dans lequel le polymère contenant du silicium, qui contient un ou plusieurs groupes aldéhyde ou cétone, est un siloxane.

6. Procédé selon les revendications 4 et 5, dans lequel une hydroxylamine monosubstituée par de l'azote est mise en réaction avec un polysiloxane à fonction aldéhyde.

7. Procédé selon les revendications 5 ou 6, dans lequel un siloxane qui a été fabriqué par hydrosilylation d'un siloxane à fonction SiH par un aldéhyde oléfinique terminal est utilisé en tant que siloxane à fonction aldéhyde.

8. Procédé selon les revendications 4 à 7, dans lequel, lors d'une première étape de procédé, un polysiloxane à fonction SiH est mis en réaction par hydrosilylation en présence d'un catalyseur de Karstedt à des températures de 20 à 200 °C avec un aldéhyde oléfinique terminal aliphatique et, lors d'une seconde étape de procédé, le produit de réaction de la première étape de procédé est mis en réaction avec une hydroxylamine monosubstituée par de l'azote à des températures de 20 à 200 °C.

9. Procédé selon l'une quelconque des revendications 4 à 8, **caractérisé en ce que** des polymères selon l'une quelconque des revendications 1 à 3 sont fabriqués.

10. Utilisation des polymères selon l'une quelconque des revendications 1 à 3 ou fabriqués selon l'une quelconque des revendications 4 à 9 pour la fabrication de préparations.

11. Utilisation selon la revendication 10, **caractérisée en ce que** les préparations contiennent de 0,1 à 99 % (m/m), de préférence de 0,5 à 10 % (m/m), notamment de 1 à 3 % (m/m), des polymères contenant du silicium contenant au moins un groupe nitrone, par rapport à la préparation, et au moins un polymère supplémentaire, qui contient des doubles liaisons et/ou d'autres groupes fonctionnels, qui contiennent de préférence des groupes acryle.

12. Utilisation selon la revendication 10 ou 11, **caractérisée en ce que** des additifs supplémentaires tels que des agents siccatifs, des agents d'étalement, des colorants et/ou des pigments colorés, des agents mouillants, des liants, des diluants réactifs, des tensioactifs, des initiateurs activables thermiquement, des photoinitiateurs, des catalyseurs, des émollients, des émulsifiants, des antioxydants, des hydrotropes (ou polyols), des solides et des charges, des additifs nacrés, des répulsifs d'insectes, des agents antitaches, des agents de nucléation, des conservateurs, des azurants optiques, des agents ignifuges, des antistatiques, des agents gonflants, des plastifiants, des parfums, des agents actifs, des additifs de soin, des agents surgraissants, des solvants et/ou des modulateurs de viscosité sont contenus.

13. Préparation, **caractérisée en ce qu'**elle contient de 0,1 à 99 % en poids, de préférence de 0,5 à 10 % en poids, notamment de 1 à 3 % en poids, par rapport à la préparation, de polymères contenant un groupe nitrone selon l'une quelconque des revendications 1 à 3 ou fabriqués selon l'une quelconque des revendications 4 à 9, et au moins un polymère supplémentaire, qui contient des doubles liaisons et/ou d'autres groupes fonctionnels, qui contiennent de préférence des groupes acryle.

14. Préparations selon la revendication 13, dont la viscosité est inférieure à 5 000 mPa·s.

15. Préparations selon l'une quelconque des revendications 13 à 14, **caractérisées en ce que** celles-ci sont des agents de revêtement ou des encres d'impression.
